(19) **Europäisches Patentamt**

**European Patent Office**

**Office européen des brevets**

(11) **EP 1 052 400 B1**

(12) **EUROPEAN PATENT SPECIFICATION**

(45) Date of publication and mention
of the grant of the patent:
**27.10.2004  Bulletin 2004/44**

(51) Int Cl.⁷: **F02N 11/08**, F02N 11/04,
B60K 41/00, B60K 6/04,
B60L 11/12

(21) Application number: **00109807.8**

(22) Date of filing: **09.05.2000**

(54) **Automatic stop-restart system of automotive internal combustion engine**

Automatische Stop-Startanlage für Verbrennungsmotor für Kraftfahrzeuge

Dispositif d'arrêt et de redémarrage automatique pour moteur à combustion interne pour véhicule

(84) Designated Contracting States:
**DE FR GB**

(30) Priority: **12.05.1999  JP  13103999
19.08.1999  JP  23311399**

(43) Date of publication of application:
**15.11.2000  Bulletin 2000/46**

(73) Proprietor: **NISSAN MOTOR COMPANY, LIMITED
Yokohama-shi, Kanagawa 221-0023 (JP)**

(72) Inventors:
• **Nakajima, Yuki
Yokohama-shi, Kanagawa 236-0057 (JP)**
• **Ogane, Hiroaki
Fujisawa-shi, Kanagawa 251-0014 (JP)**
• **Yoshino, Takahiro
Yokosuka-shi, Kanagawa 239-0082 (JP)**
• **Uchida, Masaaki
Yokosuka-shi, Kanagawa 237-0066 (JP)**

• **Matsumoto, Mikio
Yokohama-shi, Kanagawa 232-0064 (JP)**

(74) Representative: **Weber, Joachim, Dr.
Hoefer & Partner
Patentanwälte
Gabriel-Max-Strasse 29
81545 München (DE)**

(56) References cited:
**EP-A- 0 962 651          EP-A- 0 989 299
EP-A- 0 992 714          EP-A- 1 020 640
US-A- 5 495 127          US-A- 6 018 694
US-A- 6 054 776          US-B1- 6 247 437**

• **PATENT ABSTRACTS OF JAPAN vol. 1996, no.
11, 29 November 1996 (1996-11-29) & JP 08
193531 A (NIPPONDENSO CO LTD), 30 July 1996
(1996-07-30)**

**Description**

**BACKGROUND OF THE INVENTION**

Field of the Invention

The present invention relates to a system for automatically stopping and restarting an internal combustion engine for an automotive vehicle, and particularly to an automatic stop-restart system of an automotive internal combustion engine in which the engine is automatically stopped when the vehicle is in its stopped state, and automatically restarted from the vehicle stand-still state.

Description of the Prior Art

In recent years, there have been proposed and developed various automatic stop-restart systems. One such automatic stop-restart system has been disclosed in Japanese Patent Provisional Publication No. 8-291725. The conventional automatic stop-restart device disclosed in the Japanese Patent Provisional Publication No. 8-291725, uses various engine/vehicle sensor signals from a selector-lever position sensor, a vehicle speed sensor, an engine speed sensor, a brake switch, and the like, to temporarily automatically stop an internal combustion engine under a specified condition where the selector lever of an automatic transmission is kept in its neutral position (N range), the vehicle speed is zero, the engine speed is an idle speed, and the brake pedal is depressed. In the automatic engine-stop state, when the automatic stop-restart device detects that the selector lever is shifted from the N range to a D gear range, the vehicle speed is held at zero, the engine speed is held at zero, and the brake pedal is undepressed, the device electrically holds the automatic transmission neutral (N position), and then restarts the engine. Thereafter, as soon as the engine speed reaches a predetermined idle speed, the device operates to release the holding state of the automatic transmission, to re-start the vehicle.

**SUMMARY OF THE INVENTION**

Electrically holding the automatic transmission at the N position and then restarting the engine causes a time delay in occurrence of a creep force in an automotive internal combustion engine mated to an automatic transmission which uses a torque converter. This results in uncomfortable feeling when re-starting the vehicle from the standstill position. Also, when the engine speed is rising up after restarting the engine, the N-range holding state of the automatic transmission is rapidly released, a large driving force (or a large driving torque) will be transmitted via the torque converter to road wheels. There is a possibility of undesirable power-train shock, particularly, when an accelerator pedal is depressed almost simultaneously with the releasing action of the brakes. To avoid the delay in development of the creep force and power-train shock, a motor generator is useful as an automatic starter for the engine. There is another problem during early stages of the automatic engine restarting operation. That is, just after the engine is restarted, there is less development of a negative pressure (boost) in the intake pipe of the induction system, and thus a quantity of intake air drawn into engine cylinders is large. This results in an increased engine torque (an increased engine's output). Under such a condition, if the accelerator pedal is depressed almost simultaneously with the releasing action of the brake pedal, excessively high engine torque may be transferred to drive wheels. For instance, when the accelerator is depressed in the engine-idle state, a negative pressure (boost) in the intake pipe has developed adequately. In this case, a desired engine output torque may be produced. Conversely, when the engine is automatically restarted from a particular condition where the engine is in the stopped state, (that is, after completion of a so-called "idle-stop" operation), and also the accelerator pedal is depressed at once simultaneously with the releasing action of the brakes, the negative pressure (boost) in the intake pipe remains held at an atmospheric pressure level. This may produce an excessively high engine torque near at an engine idle speed when fuel is injected. There is a remarkable difference between an accelerating force obtained during the engine start-up period from the idling state, and an accelerating force obtained during the engine start-up period from the engine automatically-stopped state. To avoid this, it is desirable to switch or control the operating mode of the motor generator to an engine-torque absorption mode (a regenerative mode or an electric-power generation mode for recharging the battery) in synchronization with occurrence of engine torque (or an engine combustion torque created by burning of air-fuel mixture in a combustion chamber of the engine), when the engine is automatically restarted from the automatically-stopped state. However, complete explosion in the engine does not always occur after the fuel-injection operation is initiated during the engine start-up period. Assuming that the complete explosion does not occur in the engine just after the fuel-injection operation, an undesirable drop in engine speed may arise from shifting to the regenerative mode of the motor/generator. An unsatisfactory motor/generator regenerative-torque control may result in excessive engine-torque absorbing action. In such a case, a driver's required accelerating force cannot be obtained. Maybe, a certain sort of batteries such as a lead-

**EP 1 052 400 B1**

acid battery, cannot absorb such excessive engine torque satisfactorily, and thus there may be a rapid rise in battery voltage. This reduces the life of the battery. To avoid this, it is possible to reduce the number of cycles of "idle-stop" operations to a minimum. Reducing the number of cycles of the "idle-stop" operations is not preferable from the viewpoint of reduced fuel consumption. The other way to avoid excessive engine torque is an ignition timing retardation or an air/fuel mixture ratio (A/F) feedback control to lean. In this case, there is a problem of unstable combustion.

Accordingly, it is an object of the invention to provide an automatic stop-restart system for an internal combustion engine, which avoids the aforementioned disadvantages.

In order to accomplish the aforementioned and other objects of the present invention, an automatic stop-restart system of an automotive internal combustion engine mated to an automatic transmission which uses either one of a torque converter and a start-up clutch for engine torque transmission to axle shafts of driven wheels of an automotive vehicle, the system capable of automatically stopping the engine when the vehicle is in a stopped state, and automatically restarting the engine in a torque-transmission state that an engine torque is transmitted to the axle shafts of the driven wheels during a start-up period of the vehicle, comprises a motor generator disposed between the engine and the automatic transmission, and capable of operating in a power-running mode to automatically restart the engine by a motoring torque produced by a motoring operation of the motor generator during the start-up period and operating in a regenerative mode for energy regeneration, a sensor sensing a rotational speed of the engine, a sensor sensing an amount of depression of an accelerator pedal, and a control unit comprising a first control section performing a rotational speed control for the motor generator by setting a desired rotational speed at a predetermined idle speed so that the rotational speed of the engine is brought closer to the desired rotational speed during an automatic engine-restart operating mode, and a second control section setting a regenerative torque limiter which limits a regenerative torque of the motor generator to a controllable specified torque level, while executing the rotational speed control for the motor generator when the accelerator pedal is depressed during the automatic engine-restart operating mode.

It is preferable that the control unit may comprise a delay section which retards an engine's output control operation of the engine output control device with respect to such a timing that the accelerator pedal is depressed, during the automatic engine-restart operating mode.

**BRIEF DESCRIPTION OF THE DRAWINGS**

Fig. 1 is a system schematic of one embodiment of an automatic stop-restart system of the invention.
Fig. 2 is a system diagram illustrating a system configuration of an integrated engine control system.
Figs. 3A and 3B show an automatic stop-restart control routine executed by the system of the embodiment.
Fig. 4 is a flow chart illustrating a regenerative torque limiter control routine executed in parallel with the automatic stop-restart control routine of Figs. 3A and 3B.
Fig. 5 is a characteristic diagram of an initial value of the regenerative torque limiter.
Fig. 6 is a characteristic map of the regenerative torque limiter, showing the relationship among the initial value TRQLMTST of the regenerative torque limiter, the motoring time TISTPOF, and the engine stop time TISTPON.
Fig. 7 is a characteristic diagram, showing variations in excess-air quantity and variations in a required torque to be absorbed by the motor generator (obtained when depressing the accelerator pedal just after motoring), and variations in excess-air quantity and variations in a required torque to be absorbed by the motor generator (obtained when depressing the accelerator pedal after 0.8 second of motoring).
Fig. 8 is a timing chart showing subtraction from and addition to the initial value (TRQLMTST) of the regenerative torque limiter.
Figs. 9A - 9C are timing charts obtained when the engine 1 is restarted, while keeping the accelerator pedal in its undepressed state.
Figs. 10A - 10C are timing charts obtained when the automatic engine-restart operating mode is initiated and soon the accelerator pedal is depressed.
Fig. 11 is a regenerative torque limiter initial value (TRQLMTST) setting routine executed by an automatic stop-restart system of a second embodiment.
Fig. 12 is a regenerative torque limiter initial value (TRQLMTST) setting routine executed by an automatic stop-restart system of a third embodiment.
Fig. 13 is a timing chart of the regenerative torque limiter, related to the second (Fig. 11) and third (Fig. 12) embodiments.
Fig. 14 is a regenerative torque limiter initial value (TRQLMTST) setting routine executed by an automatic stop-restart system of a fourth embodiment.
Fig. 15 is a timing chart of the regenerative torque limiter, related to the fourth embodiment (Fig. 14).
Fig. 16 is a flow chart illustrating a delayed throttle-opening control routine.

3

Fig. 17 is a characteristic map showing the relationship among the accelerator opening, the regenerative-torque-limiter initial value, and the delay time.

Figs. 18A, 18B, and 18C are timing charts obtained when the delayed throttle-opening control is initiated at the same time depression of the accelerator pedal during the automatic engine-restart operating mode.

## DESCRIPTION OF THE PREFERRED EMBODIMENTS

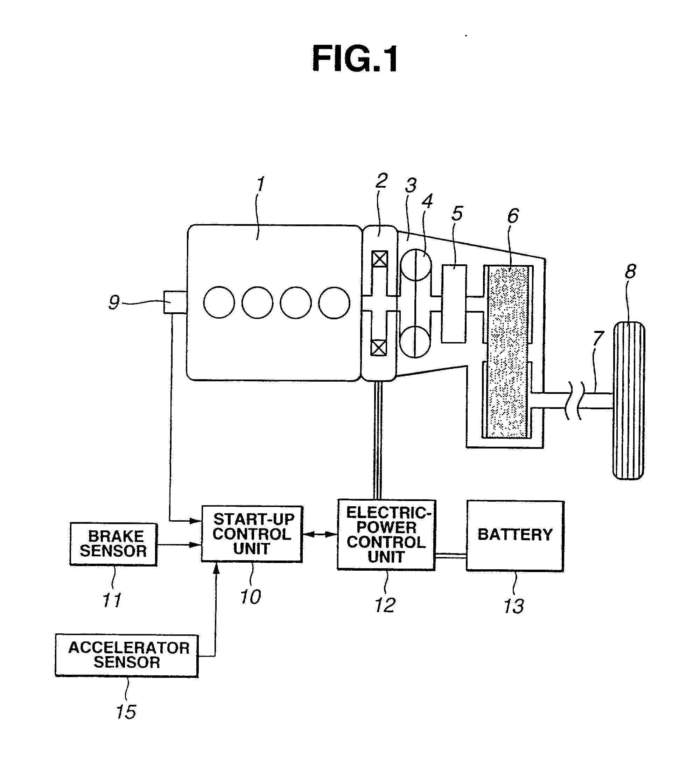

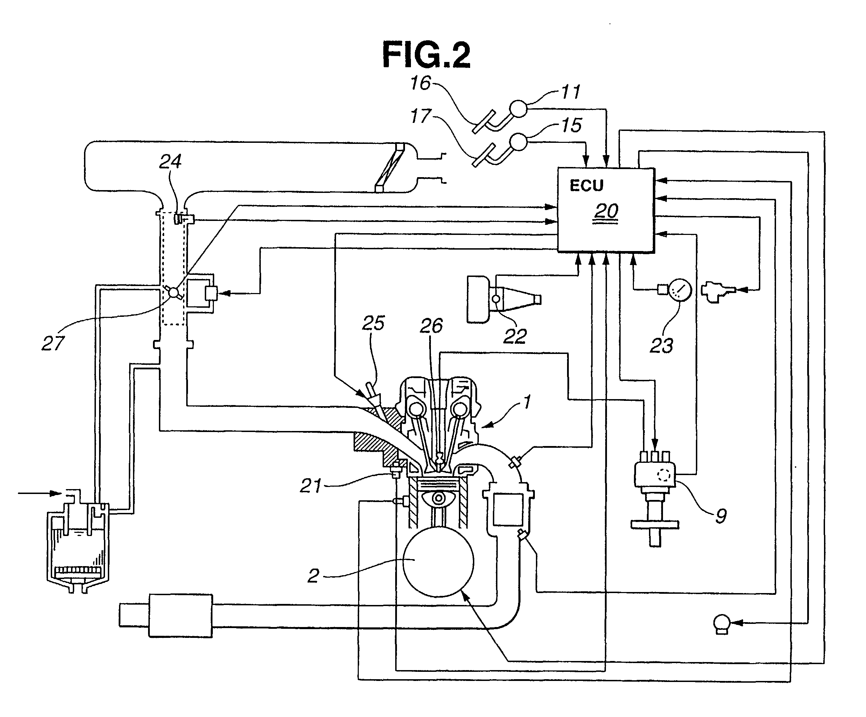

Referring now to the drawings, particularly to Fig. 1, the automatic stop-restart system of the invention is exemplified in an automotive internal combustion engine mated via an electric motor generator to a continuously variable automatic transmission, which uses a torque converter. As seen in Fig. 1, an electric motor generator 2 is disposed between the engine 1 and the continuously variable automatic transmission assembly 3. The motor generator 2 is mechanically coupled directly to the engine crankshaft of the engine 1 for rotation synchronously with the engine crankshaft. The continuously variable automatic transmission assembly 3 is constructed by the torque converter 4, a forward-reverse switching clutch 5, and a belt-drive-type continuously variable transmission (often abbreviated to a "CVT") 6. A driving torque of the engine 1 is transmitted through the motor generator 2 and the continuously variable automatic transmission assembly 3 via a drive shaft 7 to a tire 8 (or a road wheel). In the shown embodiment, although the motor generator 2 is mechanically connected directly to the engine crankshaft, in lieu thereof the motor generator 2 may be connected through a drive belt or a drive chain to the engine crankshaft. In place of the continuously variable automatic transmission, a typical automatic transmission system in which the speed ratio of driving to driven elements is variable in a stepwise manner over a required working range, may be used. Furthermore, instead of the use of the torque converter 4, the CVT 6 may use a magnetic start-up clutch for engine torque transmission (engine's output transmission) to axle shafts of driven wheels of the automotive vehicle during the engine restart period. The motor generator 2 having a driving-connection with and having a driven-connection with an electric-power control unit 12 (including an inverter), for regenerating electricity which is stored in a car battery 13 during vehicle deceleration (during braking) or during downhill driving, and for supplying electricity from the battery 13 via the electric-power control unit 12 (an inverter) to the motor generator 2 during vehicle start-up period from the standstill state or during uphill driving. A rotational speed sensor 9, such as a crankshaft position sensor, is located near the engine crankshaft end, for detecting a motor-generator speed of the motor generator 2 (an engine speed of the engine 1), and for detecting a crank angle of the engine crankshaft (a relative position or angular phase of the crankshaft). A brake sensor 11 is provided for detecting an amount of depression of a brake pedal 16, while an accelerator sensor (an accelerator position sensor) 15 is provided for detecting an amount of depression (an accelerator opening) of an accelerator pedal 17 (see Fig. 2). A start-up control unit 10 receives signals from the above engine/vehicle sensors 9, 11 and 15. Although it is not clearly shown in Fig. 1, the start-up control unit 10 is electrically connected to an electronic engine control unit (ECU) 20 via an electronic control line (not shown), to output a command signal regarding both a desired torque and a desired rotational speed to the electric-power control unit 12 for controlling the motor generator 2. Usually, the start-up control unit 10 is incorporated in the engine control unit 20. Alternatively, the start-up control unit 10 may be incorporated in an integrated controller (not shown) capable of integrally controlling a power train system of the vehicle. Referring to Fig. 2, there is shown the system layout of the integrated engine control system. As shown in Fig. 2, the input interface of the engine control unit 20 receives signals from an engine temperature sensor 21, a selector lever position sensor 22, and a vehicle speed sensor 23, in addition to signals from the rotational speed sensor 9, the brake sensor 11 and the accelerator sensor 15. The engine speed sensor 21 is provided to detect an engine operating temperature (engine temperature). Generally, a water temperature sensor in which an actual engine operating temperature such as an engine coolant temperature is detected or sensed, is used as the engine temperature sensor 21. The selector lever position sensor 22 is provided for detecting a selector-lever position of the automatic transmission assembly 3. The vehicle speed sensor 23 is provided for detecting a vehicle speed. The engine control unit 20 performs an automatic engine-stop control as well as an automatic engine-restart control, based on the above engine/vehicle sensor signals. The input interface of the ECU 20 also receives a signal from an air flow meter 24 and a signal from a throttle position sensor (not numbered) located near an electronically-controlled throttle valve 27 whose opening is arbitrarily controlled depending on the degree of depression of the accelerator pedal 17. The ECU 20 arithmetically calculates an amount of fuel injected depending upon a quantity of intake air measured by the air flow meter 24, and also calculates an ignition timing suitable for the more recent engine speed and engine load data which are constantly monitored by input information regarding engine speed and angular phase (crank angle) sensed by the rotational speed sensor 9. In order to deliver or inject a calculated amount of fuel into the each engine cylinder, an individual fuel injector 25 which is provided at an intake port of each engine cylinder, is driven or energized. A spark timing of a spark plug 26 of each engine cylinder is electronically controlled to match the ignition timing calculated. As discussed above, in the shown embodiment, a so-called "multi-port fuel injection (MPI) system" is used. As will be fully described later, the fundamental concept of the automatic stop-restart system of the invention can be applied to a so-called direct-injection internal combustion engine in which fuel is injected directly into a combustion chamber. The electronically-controlled throttle 27 is located in the induction system, for controlling the quantity of intake air drawn into the engine 1 in response to a command signal indicative of a desired engine torque (or a desired engine's output). The command signal is generated by the above-mentioned integrated controller. As seen in Fig. 2, the system of the embodiment is exemplified in a spark-ignited engine, the system of the invention can be applied to a diesel engine. In case of diesel engines, instead of an intake-air quantity (regarded as engine load on gasoline engines), a fuel-injection amount is used to properly adjust or control engine output torque.

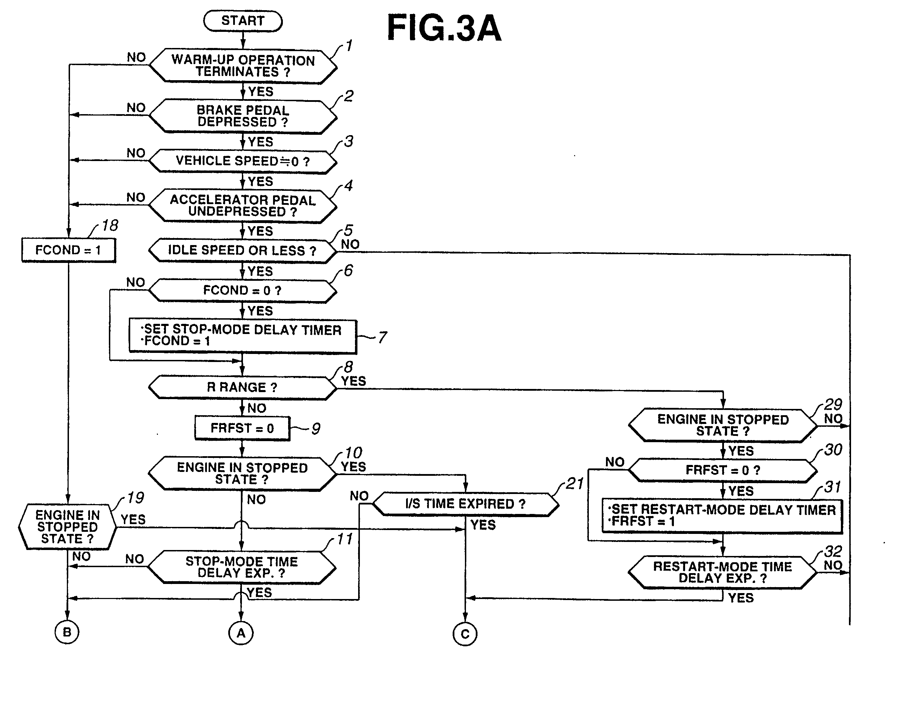

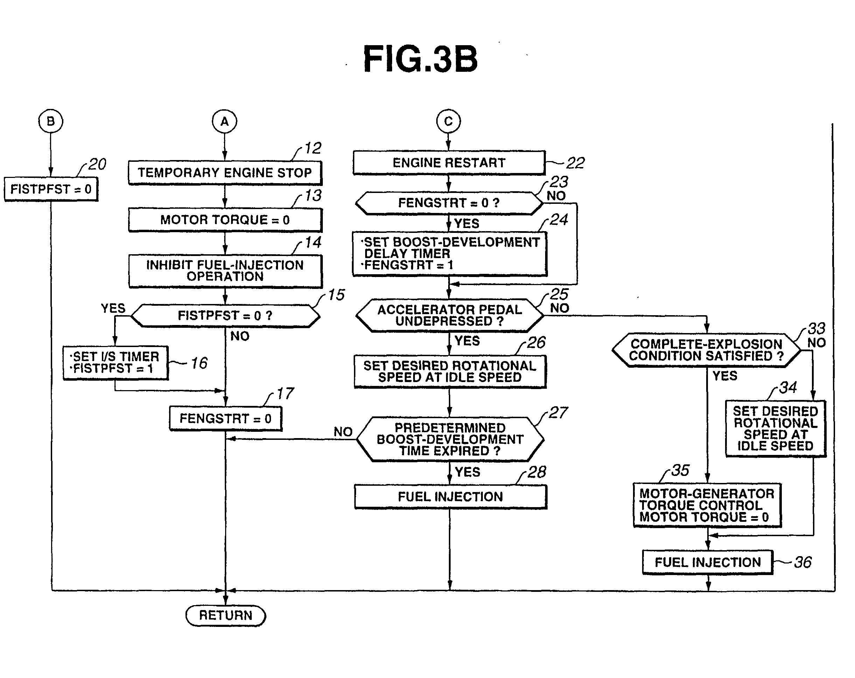

Referring now to Figs. 3A and 3B, there is shown the automatic stop-restart control routine for the engine 1, executed by the system of the embodiment.

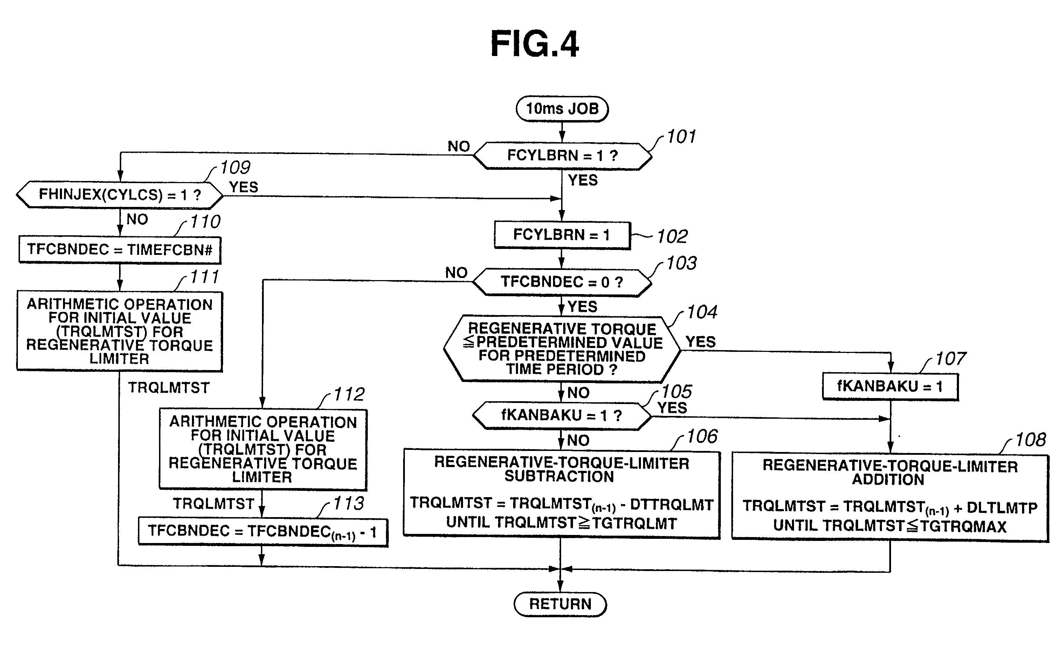

At step 1, a check is made to determine whether the engine warm-up operation terminates. At step 2, a check is made to determine whether the brake pedal 16 is depressed. At step 3, a comparison check is made to determine whether the vehicle speed is less than a predetermined low speed. By way of step 3, the ECU determines that the vehicle speed is held almost at zero. At step 4, a check is made to determine whether the accelerator pedal 17 is undepressed. At step 5, a comparison check is made to determine whether the engine speed is below a predetermined idle speed such as 800 rpm. At step 6, a check is made to determine whether all of the conditions of steps 1 - 5 are satisfied at the first cycle of the automatic stop-restart control routine. Concretely, the check is based on a flag FCOND. If the flag FCOND is reset to "0", the ECU determines that this cycle is the first time that all of the conditions of steps 1 - 5 has been satisfied. When the answer to step 6 is in the affirmative (YES), step 7 occurs. At step 7, an engine-stop-mode delay timer, through which entry into an automatic engine-stop mode is timed, is set to a predetermined delay time, and additionally the flag FCOND is set at "1". At step 8, a check is made to determine whether the selector lever is kept in its reverse position (R range). When the selector lever is moved out of the R range, the routine proceeds via steps 9 , 10 and 11 to a series of automatic engine-stop procedures, that is, steps 12 - 17. When the selector-lever position is kept in the R range and the engine 1 has already been stopped, the routine proceeds from step 8 through steps 29 - 32 to step 22, without executing the automatic engine-stop operation. After the flow from step 8 through steps 29 - 31 to step 32, step 22 (which will be fully described later) occurs so as to initiate an automatic engine-restart mode. At step 8, when the ECU determines that the selector lever is kept in the drive position (D range), or in the neutral position (N range), or in the parking position (P range), the flag FRFST is reset to "0" at step 9. The condition of FRFST = 0 means that the selector lever is not kept in the R range. Thereafter, at step 10, a test is made to determine whether the engine 1 is in the stopped state. When the answer to step 10 is negative (NO), step 11 occurs. Conversely, when the answer to step 10 is affirmative (YES), step 21 occurs. At step 21, a test is made to determine whether an idle-stop permissible time of an I/S timer set at step 16 (which will be fully described later) has elapsed. When the answer to step 21 is in the affirmative, the routine proceeds to step 22. When the answer to step 21 is in the negative, the routine proceeds to step 20. At step 20, a flag FISTPFST (fully described later) is reset to "0". Returning to step 11, a test is made to determine whether the predetermined delay time (see step 7) has expired. Only when the predetermined delay time has expired, a series of automatic engine-stop procedures, that is, steps 12 - 17 are executed, and thus the system enters the automatic engine-stop mode. The engine 1 enters a temporary engine-stop mode at which mode the engine 1 is temporarily stopped. At step 13, a motor torque of the motor generator 2 is set at "0". The motor torque of the motor generator 2 corresponds to a motoring torque (a positive torque) when the motor generator 2 is in the power-running state. Conversely, when the motor generator 2 is in the regenerative state, the motor torque corresponds to a regenerative torque (a negative torque). At step 14, the fuel-injection operation of the engine 1 is inhibited. The inhibiting operation of fuel injection is generally made by way of a fuel-cutoff operation. Then, at step 15, a check is made to determine whether the flag FISTPFST is reset to "0". The condition of FISTPFST = 0 means that this automatic engine-stop sequence is the first time of the automatic engine stop-restart routine of Figs. 3A - 3B. When the first automatic engine-stop sequence is detected by the condition of FISTPFST = 0, the routine proceeds from step 15 to step 16. At step 16, the I/S timer for the idle-stop permissible time (I/S permissible time) is set to a predetermined value, and the flag FISTPFST is set at "1". Then, the routine proceeds from step 16 to step 17. At step 17, a flag FENGSTRT is reset to "0". The flag FENGSTRT = 1 means that the engine 1 is operative in the automatic engine-restart mode. As described above, when the vehicle is temporarily stopped, the engine 1 is also in its temporary stopped state through the entry into the automatic engine-stop mode. In the system of the embodiment (see the flow from step 8 through steps 9 - 11 to step 12 in Figs. 3A - 3B), the automatic engine-stop mode is initiated when the selector lever is kept in either the D, N, or P range. In lieu thereof, the automatic engine-stop operating mode may be executed only when the selector-lever position is the D range. On the other hand, under a particular condition where at least one of the conditions of steps 1 - 4 is unsatisfied, that is, the engine is in the automatically-stopped state, when the brake pedal 16 is released or when the accelerator pedal 17 is depressed, the routine proceeds to step 18. At step 18, the flag FCOND is cleared to "0". Then, step 19 occurs. At step 19, a test is made to determine whether the engine is in the stopped state. During the automatic engine-stop mode, the routine flows from step 19 to step 22. From step 22, an automatic engine-restart operating mode is initiated. At the automatic engine-restart operating mode executed at step 22, the output interface of the ECU generates a command signal representative of a desired motoring torque (corresponding to a rated torque (a maximum torque such as 90Nm) applied to the engine 1 by the motor generator 2 during the initial stage of the motoring operation) to the start-up control unit 10, and so that the motor generator 2 begins to drive according to its motor torque control. At step 23, a check is made to determine whether or not the automatic engine-restart mode indicative flag FENGSTRT is reset to "0". If the flag FENGSTRT remains reset, the flag FENGSTRT is set at "1" at step 24. At the same time, via step 24, a boost-development delay timer for a developmental time for negative pressure (boost) in the air-intake pipe, is set to a predetermined delay time. The delay time (corresponding to the developmental time for negative pressure (boost)) is defined as a time interval from a time when the motoring operation for the engine 1 is initiated to a time when the negative pressure (boost) develops and then rises up to a predetermined negative pressure level, such as -500 mmHg, under a particular condition where the accelerator pedal remains undepressed. The term "motoring operation" or "motoring mode" means that the engine 1 is rotated or cranked by a motoring torque applied to the engine by means of the motor generator 2 being in the power-running state. Just after the motoring operation is initiated, the negative pressure (boost) does not yet develop and the internal pressure in the air-intake pipe is almost equal to an atmospheric pressure level. At step 25, a check is made to determine whether the accelerator pedal 17 is undepressed. During the engine start-up period with the accelerator pedal undepressed, the routine proceeds from step 25 to step 26. At step 26, a desired rotational speed (a desired engine speed) to be attained by way of the motor generator 2 is set at the predetermined idle speed such as 800 rpm. After step 26, the motor generator 2 is operated according to a motor/generator rotational speed control. At step 27, a check is made to determine whether the predetermined delay time (the predetermined boost-development time) has expired. When the answer to step 27 is affirmative (YES), that is, when the predetermined boost-development delay time has expired, the routine proceeds from step 27 to step 28. At step 28, the fuel-injection operation is initiated. Returning to step 8, when the answer to step 8 is in the affirmative (YES), that is, the selector-lever position is the R range, the routine proceeds to step 29. At step 29, a test is made to determine whether the engine 1 is in the stopped state. When the answer to step 29 is negative, the program is returned. When the answer to step 29 is affirmative, step 30 occurs. At step 30, a check is made to determine whether the R-range indicative flag FRFST is reset to "0". In case of FRFST = 1, the routine proceeds from step 30 to step 32. Conversely, in case of FRFST = 0, the routine proceeds to step 31. At step 31, an automatic engine-restart mode delay timer for entry into step 22 (the automatic engine-restart operating mode) is set to a predetermined value, and simultaneously the R-range indicative flag FRFST is set at "1". At step 32, a check is made to determine whether the predetermined delay time for entry into the automatic engine-restart operating mode has expired. When the answer to step 32 is affirmative (YES), the routine flows from step 32 to step 22 (the automatic engine-restart operating mode). After the fuel-injection operation is initiated through step 28, the control routine of Figs. 3A - 3B is repeatedly executed. At the subsequent cycle, if the depressed state of the accelerator pedal 17 is detected by step 25, the routine proceeds from step 25 to step 33, to terminate the automatic engine-restart operating mode. At step 33, a test is made to determine whether complete explosion occurs in the engine 1. A predetermined condition for determining that complete explosion occurs in the engine 1 will be hereinafter referred to as a "complete-explosion condition". In other words, at step 33, a complete-explosion decision is made. Regarding the complete-explosion condition, see step 104 of Fig. 4 (described later). When the predetermined complete-explosion condition is satisfied, step 35 occurs. At step 35, a motor-generator torque control is executed by setting the motor torque of the motor generator 2 at "0". Then, the routine proceeds to step 36. At step 36, the ECU begins the fuel-injection operation. In contrast to the above, when the predetermined complete-explosion condition is unsatisfied, the routine flows from step 33 to step 34. In the same manner as step 26, at step 34 the motor-generator rotational speed control is initiated by setting the desired rotational speed (the desired engine speed) to be attained by the motor generator 2 to the predetermined idle speed. After step 34, the routine proceeds to step 36 to begin a fuel-injection operation. When the ECU 20 determines that the previously-noted complete explosion occurs in the engine 1, the system allows entry into the above motor-generator torque control (see the flow from step 33 to step 35) that the motor torque of the motor generator 2 is set to "0", and additionally releases a regenerative torque limiter, whose limiting operation will be fully described later in reference to Figs. 4 - 8. In this manner, the ECU 20 terminates the automatic engine-restart control (the automatic engine-restart operating mode). When the engine is automatically restarted from the stopped state, a regenerative torque limiter control shown in Fig. 4 is also executed in parallel with the automatic engine-restart control, so as to automatically control or limit a regenerative torque of the motor generator 2 (being in the regenerative state) to a controllable specified torque level.

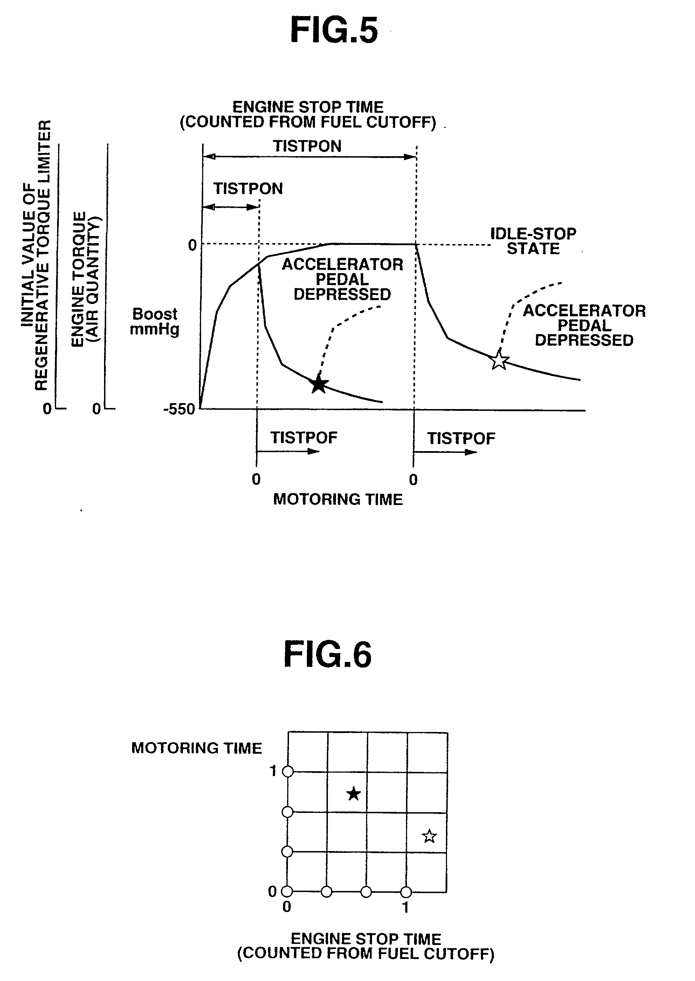

Referring now to Fig. 4, there is shown the regenerative torque limiter control (a setting routine of the regenerative torque limiter) according to which a regenerative torque of the motor generator 2 is properly limited to a controllable specified torque level. At step 101, a check is made to determine whether or not an engine cylinder that spark plug firing is initiated at the next ignition timing will be burned. The check of step 101 is based on a flag FCYLBRN. The flag FCYLBRN is used to estimate whether an engine cylinder that spark plug firing is initiated at the next ignition timing will be brought into a combustion stroke. As discussed later, the setting of the flag FCYLBRN is based on both a flag CYLCS and a flag FHINJEX(CYLCS) shown in step 109. When the ECU determines that an engine cylinder that spark plug firing is initiated at the next ignition timing will be brought into a combustion stroke, the flag FCYLBRN is set at "1" (see step 102). Conversely, when the ECU determines that an engine cylinder that spark plug firing is initiated at the next ignition timing will not be brought into a combustion stroke, the flag FCYLBRN remains reset to "0". Until the flag FCYLBRN is set, the flow from step 101 to step 109 is repeated. At step 109, a test is made to determine whether fuel is injected into an engine cylinder that spark plug firing will be initiated at the next ignition timing. The flag CYLCS is determined depending on the current crank-angle position (the current angular phase of the engine crankshaft) corresponding to information regarding which engine cylinder is in a compression stroke at the current cycle of the regenerative torque limiter control routine of Fig. 4. That is, the flag CYLCS is provided to specify the cylinder number of the engine cylinder being in the compression stroke at the current cycle (and at the current crank angle position). As per the flag FHINJEX(CYLCS), the state of FHINJEX(CYLCS) = 1 means that fuel has already been injected into the engine cylinder that spark plug firing will be initiated at the next ignition timing. When the answer to step 109 is negative (NO), that is, the ECU determines that fuel is not injected into the engine cylinder that spark plug firing will be initiated at the next ignition timing, step 110 occurs. At step 110, a delay timer is set to a predetermined delay time TFCBNDEC (see TFCBNDEC = TIMEFCBN#). At step 111, arithmetic-calculation for the initial value TRQLMTST (regenerative torque limiting value) for the regenerative torque limiter incorporated in the system of the embodiment is repeatedly executed as time-triggered interrupt routines to be triggered every predetermined intervals such as 10 milliseconds. When the condition of FCYLBRN = 1 is satisfied at step 101 or when the answer to step 109 is in the affirmative (YES), step 102 occurs. Actually, when the fuel-injection operation is initiated and thus fuel injected into the engine cylinder, the flag FCYLBRN is set at "1" at step 102. At step 103, a test is made to determine whether the predetermined delay time TFCBNDEC has expired, that is, the reverse delay time TFCBNDEC reaches "0". In case of TFCBNDEC ≠ 0, step 112 occurs. In the same manner as step 111, at step 112 the arithmetic-calculation for the initial value TRQLMTST for the regenerative torque limiter is repeatedly executed as time-triggered interrupt routines to be triggered every predetermined intervals such as 10 milliseconds. Then, at step 113, subtraction operation for the reverse delay timer is executed by decrementing the previous value $TFCBNDEC_{(n-1)}$ of the delay time TFCBNDEC by "1". The initial value TRQLMTST of the regenerative torque limiter is obtained as a function of the engine stop time TISTPON (corresponding to a time period (elapsed time) counted from initiation of the fuel cutoff operation) and the motoring time TISTPOF (corresponding to a time period counted from initiation of the motoring operation of the motor generator 2). Fig. 5 shows the relationship among the engine torque, the initial value TRQLMTST of the regenerative torque limiter, the engine stop time TISTPON, and the motoring time TISTPOF. On the other hand, Fig. 6 is an example of a predetermined or preprogrammed characteristic map showing how the initial value TRQLMTST of the regenerative torque limiter has to be varied relative to the engine stop time TISTPON and the motoring time TISTPOF. Just after initiation of the motoring operation of the motor generator 2, there is almost no development of the negative pressure (boost). The internal pressure in the intake pipe is close to atmospheric, and thus excess air can be drawn into the engine cylinders. As a result, a comparatively great engine torque is produced. As the motoring time TISTPOF, counted from initiation of the motoring operation of the motor generator 2 increases, the negative pressure (boost) in the induction system of the engine 1 begins to develop gradually, and then there becomes less excess air. On the other hand, assuming that a time interval from a time when the engine is automatically stopped to a time when the engine is rotated or cranked by way of the motoring operation of the motor generator 2 is long, there is less negative pressure (boost) in the air-intake pipe, and thus the internal pressure in the induction system becomes almost equal to atmospheric. In contrast with this, assuming that the previously-noted time interval is short, there is some negative pressure (boost) left. For the reasons set out above, in setting the initial value TRQLMTST of the regenerative torque limiter shown in Figs. 5 and 6, the longer the time length of the engine stop time TISTPON and the shorter the time length of the motoring time TISTPOF, the greater the initial value TRQLMTST of the regenerative torque limiter. Conversely, the shorter the time length of the engine stop time TISTPON and the longer the time length of the motoring time TISTPOF, the smaller the initial value TRQLMTST of the regenerative torque limiter.

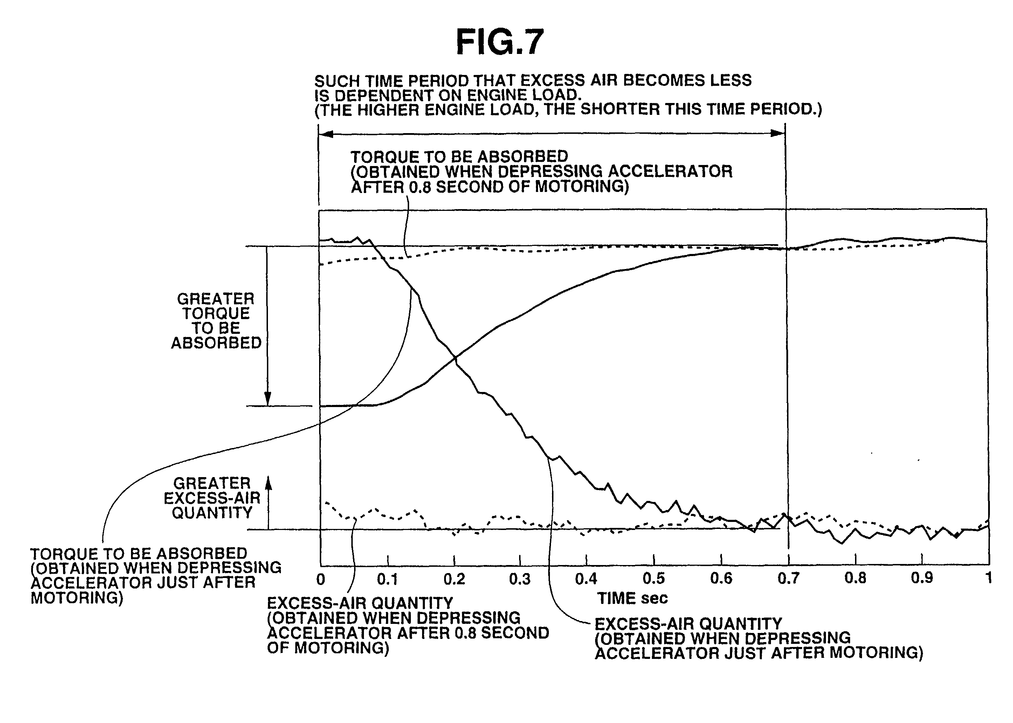

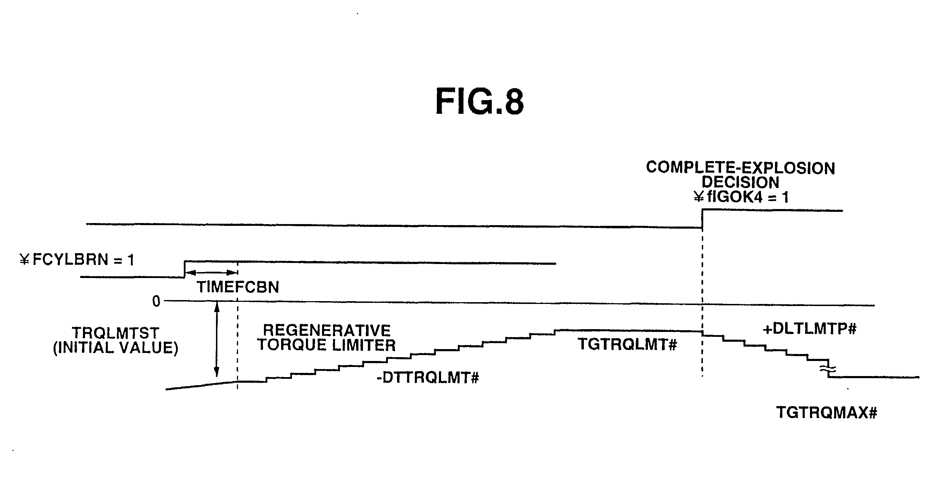

Two solid lines shown in Fig. 7 respectively indicate variations in excess-air quantity and variations in a required torque to be absorbed by the motor generator 2, obtained when depressing the accelerator pedal almost simultaneously with initiation of the motoring operation, while two broken lines shown in Fig. 7 respectively indicate variations in excess-air quantity and variations in a required torque to be absorbed by the motor generator 2, obtained when depressing the accelerator pedal after 0.8 second of initiation of the motoring operation. Actually, Fig. 7 shows test results obtained on the assumption that the internal pressure in the intake pipe is an atmospheric pressure level. As appreciated from the two solid lines shown in Fig. 7, when the accelerator pedal 17 is depressed almost simultaneously with initiation of the motoring operation, a great amount of excess air remains in the air-intake pipe, and thus a comparatively great amount of engine torque has to be absorbed by the motor generator 2 for energy regeneration or engine-torque regeneration. With the lapse of time, a quantity of excess air reduces gradually. There is no need for engine-torque absorbent (energy regeneration) after 0.7 second (whose time elapsed is dependent on engine load) from initiation of the motoring operation of the motor generator 2. As appreciated from the two broken lines shown in Fig. 7, when the accelerator pedal 17 is depressed after 0.8 second of initiation of the motoring operation, less excess air remains in the air-intake pipe, and thus a required torque value of regenerative torque to be absorbed by the motor generator 2 is excessively low. In the system of the shown embodiment (see Figs. 5 and 6), although the initial value TRQLMTST of the regenerative torque limiter is obtained as a function of both the engine stop time TISTPON (the time period (elapsed time) counted from initiation of the fuel cutoff operation) and the motoring time TISTPOF (the time period counted from initiation of the motoring operation of the motor generator 2). Alternatively, the initial value TRQLMTST of the regenerative torque limiter may be obtained as a function of only the motoring time TISTPOF (the time period counted from initiation of the motoring operation). Returning to Fig. 4, at step 103, a test is made to determine whether the predetermined time delay (TFCBNDEC) of the delay timer set at step 110 has expired. When the answer to step 103 is affirmative, step 104 occurs. The predetermined delay time TFCBNDEC is set to a delay time period from initiation of a compression stroke of an engine cylinder which will come into the compression stroke at the subsequent cycle to an ignition timing of the same cylinder. Thus, the routine proceeds from step 103 to step 104 when torque (which will be hereinafter referred to as an "engine combustion torque") created by burning of air-fuel mixture in the combustion chamber of the engine 1 begins to develop just after expiration of the time delay (TIMEFCBN) indicated by the delay timer. It is preferable to set the predetermined delay time TFCBNDEC at a time period somewhat longer than the delay time period from initiation of a compression stroke of an engine cylinder which will come into the compression stroke at the subsequent cycle to an ignition timing of the same cylinder, accounting for a peak point of combustion. In this case, the subtraction operation of step 106 (which will be fully described later) for the initial value of regenerative torque limiter starts with a delay time from the time when the engine 1 begins to produce engine combustion torque. At step 104, a test is made to determine whether or not a regenerative torque of the motor generator 2 is below a predetermined low value, such as "0" or a predetermined value close to "0", for a predetermined time period. When the answer to step 104 is negative (NO), the routine flows from step 104 via step 105 to step 106. At step 105, a check is made to determine whether or not a complete-explosion indicative flag fKANBAKU is set. At step 106, a subtraction operation for the initial value TRQLMTST of the regenerative torque limiter begins. The subtraction operation for the initial value TRQLMTST of the regenerative torque limiter is repeatedly executed as time-triggered interrupt routines to be triggered every predetermined time intervals such as 10 milliseconds. The subtraction operation is executed by subtracting a predetermined value DTTRQLMT from the previous value $TRQLMTST_{(n-1)}$ of the initial value of the regenerative torque limiter, until such time that the subtracted value ($TRQLMTST_{(n-1)}$ - DTTRQLMT) reaches a target torque limiting value (a predetermined limit torque) TGTRQLMT. Conversely, when the specified condition of step 104 that the regenerative torque is held at a torque level less than or equal to the predetermined value for the predetermined time period is satisfied, the ECU 20 determines that the engine 1 is in the complete-explosion state. Thus, the routine proceeds from step 104 to step 107. At step 107, the complete-explosion indicative flag fKANBAKU is set at "1". Thereafter, at step 108, an addition operation for the initial value TRQLMTST of the regenerative torque limiter begins. The addition operation for the initial value TRQLMTST of the regenerative torque limiter is repeatedly executed as time-triggered interrupt routines to be triggered every predetermined time intervals such as 10 milliseconds. The addition operation is executed by adding a predetermined value DLTLMTP to the previous value $TRQLMTST_{(n-1)}$ of the initial value of the regenerative torque limiter, until such time that the sum ($TRQLMTST_{(n-1)}$ + DLTLMTP) reaches a predetermined maximum value (a predetermined upper limit) TGTRQMAX. That is to say, as clearly shown in Fig. 8, the arithmetic-calculation for the initial value TRQLMTST of the regenerative torque limiter is initiated upon initiation of the motoring operation of the motor generator 2. From a timing when the engine 1 begins to produce the previously-discussed "engine combustion torque", that is, upon expiration of the time delay (TIMEFCBN) represented by the delay timer, the initial value TRQLMTST of the regenerative torque limiter begins to reduce, and then reduces to the target value TGTRQLMT at a predetermined time rate of change -DTTRQLMT/10 milliseconds, until such time that the subtracted value ($TRQLMTST_{(n-1)}$ - DTTRQLMT) reaches the target value TGTRQLMT. After this, the initial value TRQLMTST of the regenerative torque limiter is limited to the target value TGTRQLMT for the predetermined time period, until such time that the complete-explosion state is detected or determined, that is, the complete-explosion indicative flag fKANBAKU is set (see the flow from step 104 via step 107 to step 108 or the flow from step 105 to step 108). After detection of the complete-explosion state of the engine 1, the limiting action of the regenerative torque limiter is released, that is, the previously-noted addition operation for the initial value TRQLMTST is initiated. As appreciated from the right-hand side of the timing chart shown in Fig. 8, according to the addition operation, the initial value TRQLMTST increases up to the predetermined maximum value TGTRQMAX at a predetermined time rate of change +DLTLMTP/10 milliseconds, until such time that the sum ($TRQLMTST_{(n-1)}$ + DLTLMTP) reaches the predetermined maximum value TGTRQMAX. At each cycle, data obtained through the arithmetic-calculation of steps 111 and 112, the subtraction operation of step 106, and the addition operation of step 108 are sent into the start-up control unit 10, only when the accelerator pedal 17 is depressed. These arithmetic operations are performed by using a positive value. Actually, the regenerative torque is handled as a negative value. For this reason, the calculated value of the initial value TRQLMTST of the regenerative torque limiter is converted from positive to negative. Actually, a signal data indicative of the initial value (-TRQLMTST) converted to negative is sent from the output interface of the ECU 20 into the start-up control unit 10.

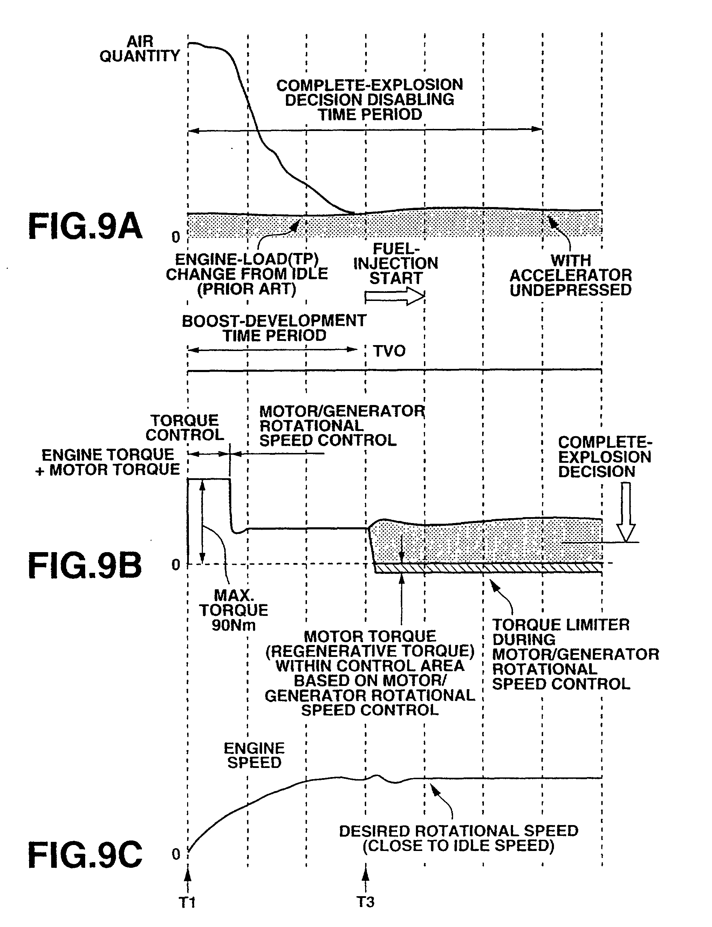

With the previously-described arrangement, when the brake pedal 16 is released from the automatic engine-stop state and the accelerator pedal 17 remains undepressed, the motor generator 2 is driven or energized to initiate the motoring mode of the motor generator, and thus the engine 1 is rotated or cranked by the motoring torque (corresponding to the rated torque, i.e., the maximum torque of 90 Nm) produced by the motor generator 2 being in the power-running state (see the time T1 of timing charts shown in Figs. 9A - 9C). When the operating mode of the motor generator 2 is shifted from the torque control to the motor-generator rotational speed control (see the rapid torque-drop point from the rated torque of 90Nm), the motor-generator rotational speed control is initiated by setting a desired rotational speed (a desired engine speed) at a predetermined idle speed. A fuel-injection operation is initiated to produce engine torque (combustion torque) upon expiration of the time delay (corresponding to the developmental time for negative pressure (boost) in the intake pipe), that is, when the rotational speed of the motor generator 2 (the rotational speed of the engine crankshaft) reaches the predetermined idle speed such as 800 rpm (see the time T3 of timing charts shown in Figs. 9A - 9C). As soon as the engine torque (combustion torque) is produced owing to fuel injection and thus begins to develop after the time T3, the motor torque of the motor generator 2 begins to reduce due to the motor-generator rotational speed control, and then the motor generator 2 is switched to the regenerative state. After the time T3, the system thus performs energy regeneration (engine-torque regeneration). As discussed above, according to the automatic stop-restart control routine shown in Figs. 3A - 3B cooperating with the regenerative torque limiter control shown in Fig. 4, when the brake pedal 16 is released from the automatic engine-stop state and the accelerator pedal 17 remains undepressed, the engine speed rises smoothly and then is held at as close as possible to the predetermined idle speed, as shown in Fig. 9C. After the time T3 (after initiation of fuel-injection and spark-plug firing), when the regenerative torque of the motor generator 2 is held below the predetermined low value for the predetermined time period, the ECU 20 determines that the complete-explosion condition is satisfied (see the flow from step 104 to step 107), and thus the automatic engine-restart mode terminates. However, after the time T3 (initiation of fuel injection) if engine torque is not produced owing to misfiring or smoking of the engine 1, the motor generator 2 is re-driven or re-energized by way of the motor-generator rotational speed control (see the flow from step 25 to step 26), such that the engine speed is adjusted or brought closer to the predetermined idle speed. Therefore, even when the occurrence of the engine torque (combustion torque) is delayed, that is, even in the presence of engine misfiring, there is no risk of stalling the engine by virtue of the motor-generator rotational speed control according to which the value of the controlled variable is brought closer to a desired engine speed (a predetermined idle speed such as 800 rpm), and thus a proper creep torque (a proper creep force) can be maintained.

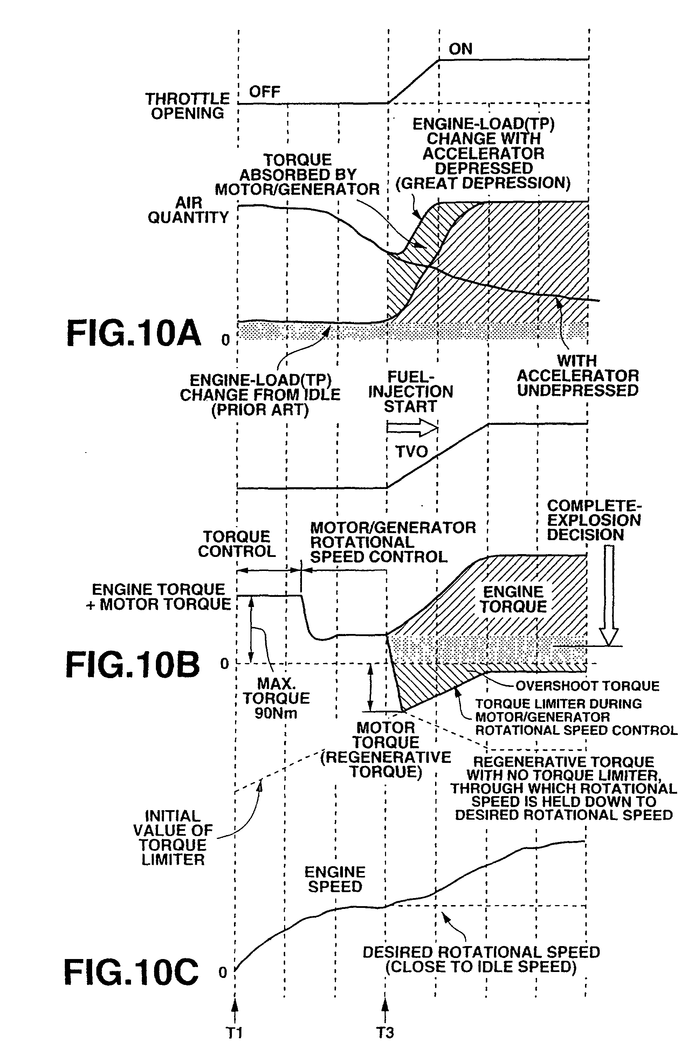

On the other hand, when the brake pedal 16 is released from the automatic engine-stop state and then the accelerator pedal 17 is depressed, first of all, the motor generator 2 is driven or energized to produce the motoring torque of the motor generator 2 set at the rated torque (the maximum torque of 90Nm) according to the torque control. Thereafter, the motor-generator rotational speed control is started (see a rapid torque-drop point of timing charts shown in Figs. 10A - 10C), setting the desired motor-generator rotational speed to the predetermined idle speed such as 800 rpm. In Fig. 10A, the uppermost polygonal line indicates an actual throttle opening, while the lowermost polygonal line TVO indicates a target throttle valve opening. At the time T3, the accelerator pedal is depressed. At the same time as depression of the accelerator pedal 17, the fuel-injection operation is initiated (see the flow from step 25 through steps 33 and 34 to step 36 at the time T3 of timing charts shown in Figs. 10A - 10C), and then the regenerative torque limiter for the motor generator 2 is set at the time T3 of Fig. 10B. The operation of the regenerative torque limiter is based on at least the motoring time TISTPOF, preferably both the engine stop time TISTPON (counted from initiation of the fuel cutoff operation by which the engine is automatically stopped) and the motoring time TISTPOF (counted from initiation of the motoring operation of the motor generator 2). However, from the viewpoint of reduced memory capacity of the computer within the ECU, it is advantageous to obtain the initial value TRQLMTST of the regenerative torque limiter as a function of only the motoring time TISTPOF. Furthermore, in order to more precisely set the initial value (TRQLMTST) of the regenerative torque limiter it is preferable to use information regarding a negative pressure (boost) in the intake pipe, sensed by an intake-air pressure sensor such as an intake manifold pressure sensor. As the engine stop time TISTPON becomes longer and the motoring time TISTPOF becomes shorter, the initial value TRQLMTST of the regenerative torque limiter is set at a greater value, to effectively absorb excessive engine torque, arising from a large amount of excess air (because there is almost no development of the negative pressure (boost) when the accelerator pedal 17 is depressed soon after releasing the brakes). That is, when the fuel-injection operation is initiated (see the timing chart shown in Fig. 10A near the time T3) and thus the engine 1 produces the previously-noted "engine combustion torque" upon depression of the accelerator pedal 17, the operating mode of the motor generator 2 is shifted from the motoring mode to the regenerative mode (see a rapid drop in motor torque just after the time T3 of the timing chart shown in Fig. 10B), by virtue of the motor-generator rotational speed control. Thus, part of excessive engine torque is effectively absorbed by energy-regeneration operation of the motor generator 2. The degree of the absorbed torque (regenerative torque) can be properly controlled to a desired value and limited to a controllable specified torque level, by means of the regenerative torque limiter incorporated in the system of the embodiment (see Fig. 8). In this case, before the engine 1 produces the "engine combustion torque", that is, the time period from T1 to T3, the motor generator 2 is in its power running state without undergoing any torque limiting action of the regenerative torque limiter. As soon as the engine 1 begins to produce the "engine combustion torque", the operating mode of the motor generator 2 is shifted from the power running mode to the regenerative mode (see the time T3). Additionally, after the time T3, the regenerative torque of the motor generator 2 is properly controlled or limited by means of the regenerative torque limiter incorporated in the system of the embodiment, so that the regenerative torque of the motor generator 2 is brought closer to the initial value (TRQLMTST) of the regenerative torque limiter which initial value is updated at each cycle of the regenerative torque limiter control routine shown in Fig. 4. In more detail, as seen in Fig. 8, after initial setting of the initial value (TRQLMTST) of the regenerative torque limiter, the initial value TRQLMTST is decreased gradually to the predetermined low value at the predetermined time rate of change (-DTTRQLMT/10 milliseconds). As shown in Figs. 10A - 10C, after initial setting of the initial value (TRQLMTST) of the regenerative torque limiter, the amount of engine torque (combustion torque) to be absorbed by the motor generator 2 in the regenerative state can be decreasingly controlled (see the lower hatched overshoot torque area of Fig. 10B). For instance, with no regenerative-torque limiting action, the motor generator 2 (in the regenerative state) may operate to absorb almost all of the combustion torque except a part of the combustion torque required to maintain an engine idling operation. In presence of the regenerative-torque limiting action performed by the regenerative torque limiter of the system of the embodiment, that is, by way of the initial setting of the initial value (TRQLIMST) and the subsequent subtracting operation of the initial value (TRQLIMST), only the excessive engine torque (only the excessive combustion torque) can be effectively absorbed. In this manner, the motor torque (regenerative torque) of the motor generator 2 is properly limited to the target torque limiting value to absorb only the undesired excessive engine combustion torque. Therefore, after the time T3, the engine speed begins to gradually increase from the predetermined idle speed toward a desired engine speed due to the regenerative-torque limiting action, while executing the motor-generator rotational speed control that the value of the controlled variable is brought closer to a desired engine speed (a predetermined idle speed such as 800 rpm). Therefore, assuming that engine torque is not produced owing to misfiring or smoking of the engine 1 after the accelerator pedal is depressed during the automatic engine-restart operating mode, that is, after the time T3, the motor generator 2 can be re-driven or re-energized by way of the motor-generator rotational speed control (see the flow from step 25 through step 33 to step 34), such that the engine speed is adjusted or brought closer to the predetermined idle speed. Therefore, even when the occurrence of the engine torque (combustion torque) is delayed, that is, even in the presence of engine misfiring, there is no risk of stalling the engine by virtue of the motor-generator rotational speed control. Thereafter, when the motor torque (the regenerative torque) of the motor generator 2 is maintained below the predetermined low value for the predetermined time period, the ECU 20 determines that the complete-explosion condition is satisfied (see the right-hand arrow marked as "COMPLETE-EXPLOSION DECISION" of Fig. 10B). At this time, the automatic engine-restart mode terminates. Although it is not clearly shown in Fig. 10B, after detection of the "complete-explosion" state of the engine 1, the regenerative torque limiter is released by repeatedly executing the previously-discussed addition operation so that such that the predetermined value DLTLMTP is added to the previous value $\text{TRQLMTST}_{(n-1)}$ of the initial value of the regenerative torque limiter, until such time that the sum ($\text{TRQLMTST}_{(n-1)}$ + DLTLMTP) reaches the predetermined upper limit TGTRQMAX. At the same time, the control mode of the motor generator 2 is switched from the motor-generator rotational speed control mode to the motor torque control, so that the motor torque of the motor generator 2 is brought closer to a desired value, such as a predetermined low value such as "0".

As described above, in the system of the embodiment, the regenerative torque limiter is set to effectively reasonably absorb excessive engine torque, accounting for the developing state of the negative pressure (boost) in the intake pipe. When the accelerator pedal 17 is depressed at once after the releasing operation of the brake pedal 16, the system of the embodiment operates to suitably absorb the overshoot torque (see the lower hatched overshoot torque area of Fig. 10B). Thus, as appreciated from the smooth engine-torque rise obtained after the time T3 shown in Fig. 10B as well as the smooth rise in engine speed obtained after the time T3 shown in Fig. 10C, the system can smoothly rise up the driving force (or driving torque) during the vehicle start-up period. For the reasons set out above, during the vehicle start-up period with the motoring operation from the engine stopped state, the system of the embodiment can provide almost the same accelerating force and accelerating feel as during the vehicle start-up period from the engine idling state, thus improving handling.

In the shown embodiment, after initial setting of the initial value (TRQLMTST) of the regenerative torque, the initially set value is designed to be reduced at the predetermined time rate of change -DTTRQLMT/10 milliseconds. The time rate of change in the initial value (TRQLMTST) may be varied depending on the negative pressure in the intake pipe (simply, intake pressure). In order to more effectively precisely absorb excessive engine torque after the occurrence of engine combustion torque, the higher the intake pressure (the absolute value), the lower the time rate of change in the initial value (TRQLMTST). Conversely, the lower the intake pressure (the absolute value), the higher the time rate of change in the initial value (TRQLMTST).

Furthermore, in the system of the embodiment, when the regenerative torque of the motor generator 2 is maintained below a predetermined low value, for example "0" or a predetermined value close to "0" for a predetermined time period, the ECU 20 determines that the complete-explosion condition is satisfied. Alternatively, when the accelerator pedal is in the depressed state, and such a condition that the regenerative torque of the motor generator 2 is continually limited to a controllable specified torque level of the regenerative torque limiter continues for a predetermined time period, the ECU 20 may determine that the complete-explosion condition is satisfied. In lieu thereof, when the number of combustion cycles of the engine 1 reaches a predetermined number, the ECU 20 may determines that the complete-explosion condition is satisfied. Moreover, in order to smoothly restart the vehicle from the engine stopped state by virtue of an increased accelerating force, the initial value TRQLMTST (an initial set value) of the regenerative torque limiter may be set at a smaller value during its initial setting period. This enhances an accelerating ability from standstill.

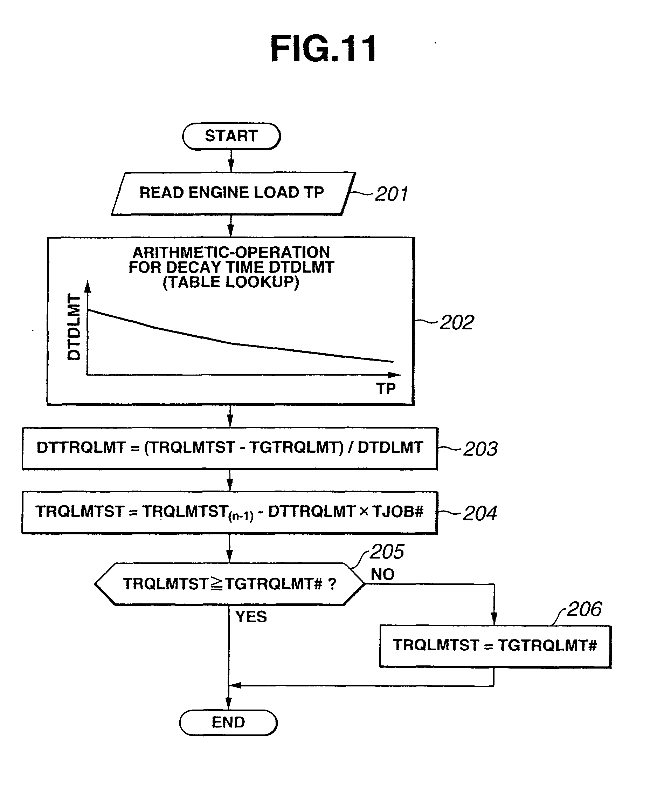

Figs. 11, 12, and 14 show another subtraction operations for the regenerative torque limiter, executable instead of the subtraction step 106 of Fig. 4.

Referring now to Fig. 11, there is shown the subtraction routine for the initial value (TRQLMTST) for the regenerative torque limiter, executed by the system of the second embodiment. At step 201, engine load TP (estimated by an intake-air quantity substantially corresponding to a manipulated variable or an operating amount of the accelerator pedal 17) is read. At step 202, a decay time DTDLMT, which is required to decay or reduce the initial set value TRQLMTST of the regenerative torque limiter to below a target torque limiting value (a predetermined limit torque) TGTRQLMT, is arithmetically calculated or map-retrieved from a predetermined characteristic map indicated in step 202, showing how the decay time DTDLMT has to be varied relative to the engine load TP. Then, at step 203, a decay step rate (or a subtraction step rate) DTTRQLMT is arithmetically calculated on the basis of the current value $\text{TRQLMTST}_{(n)}$ (simply, TRQLMTST) of the initial value of the regenerative torque limiter, the target torque limiting value TGTRQLMT, and the decay time DTDLMT, from the following expression.

$$DTTRQLMT = (TRQLMTST - TGTRQLMT)/DTDLMT$$

At step 204, the subtraction operation for the regenerative torque limiter is executed at each execution cycle (triggered each predetermined time interval such as 10 milliseconds). According to the subtraction operation of step 204, the current value $\text{TRQLMTST}_{(n)}$ (simply, TRQLMTST) of the initial value of the regenerative torque limiter is obtained by subtracting the product (DTTRQLMT×TJOB#) of the decay step rate DTTRQLMT and the execution time interval (TJOB# = 10 milliseconds) from the previous value $\text{TRQLMTST}_{(n-1)}$ of the initial value of the regenerative torque limiter, as follows.

$$\text{TRQLMTST}_{(n)} = \text{TRQLMTST}_{(n-1)} - DTTRQLMT \times TJOB\#$$

At step 205, a comparison check is made to determine whether the current value $\text{TRQLMTST}_{(n)}$ (simply, TRQLMTST) of the initial value of the regenerative torque limiter reaches the target torque limiting value TGTRQLMT. At step 206, the current value $\text{TRQLMTST}_{(n)}$ of the initial value of the regenerative torque limiter is set at the target torque limiting value TGTRQLMT. In this manner, as soon as the regenerative torque limiter (TRQLMTST) reaches the target value (TGTRQLMT), the subtraction operation ends.

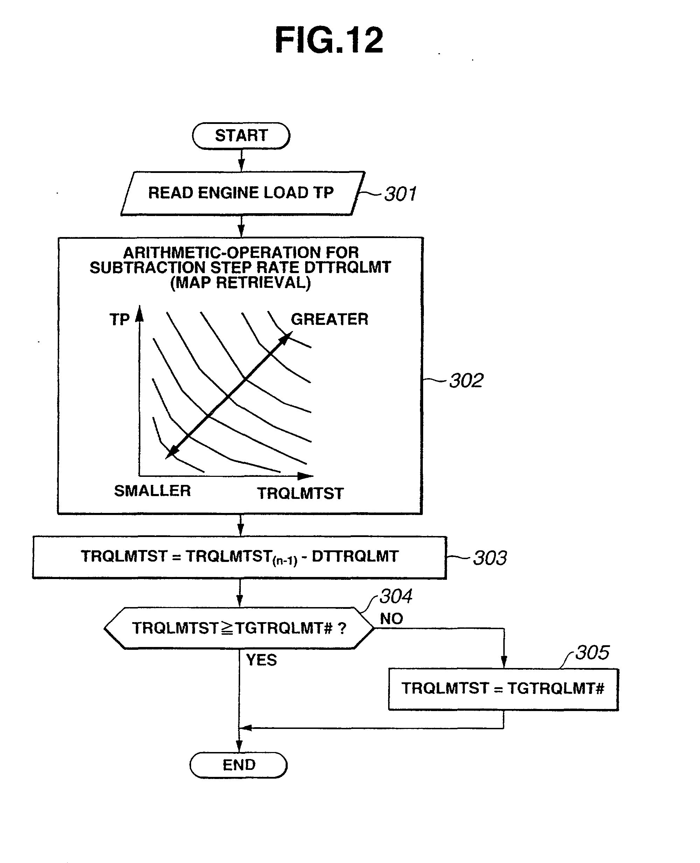

Referring now to Fig. 12, there is shown the subtraction routine for the initial value (TRQLMTST) for the regenerative torque limiter, executed by the system of the third embodiment. At step 301, engine load TP (estimated by an intake-air quantity substantially corresponding to a manipulated variable of the accelerator pedal 17) is read. At step 302, a decay step rate (or a subtraction step rate) DTTRQLMT is arithmetically calculated or map-retrieved from a predetermined characteristic map indicated in step 302, showing how the subtraction step rate DTTRQLMT has to be varied relative to both the current value $\text{TRQLMTST}_{(n)}$ (simply, TRQLMTST) of the initial value of the regenerative torque limiter and the engine load TP. At step 303, the subtraction operation for the regenerative torque limiter is executed at each execution cycle (triggered each predetermined time interval such as 10 milliseconds). According to the subtraction operation of step 303, the current value $\text{TRQLMTST}_{(n)}$ (simply, TRQLMTST) of the initial value of the regenerative torque limiter is obtained by subtracting the decay step rate (subtraction step rate) DTTRQLMT from the previous value $\text{TRQLMTST}_{(n-1)}$ of the initial value of the regenerative torque limiter, as follows.

$$\text{TRQLMTST}_{(n)} = \text{TRQLMTST}_{(n-1)} - DTTRQLMT$$

At step 304, a comparison check is made to determine whether the current value $\text{TRQLMTST}_{(n)}$ (simply, TRQLMTST) of the initial value of the regenerative torque limiter reaches the target torque limiting value TGTRQLMT. At step 305, the current value $\text{TRQLMTST}_{(n)}$ of the initial value of the regenerative torque limiter is set at the target torque limiting value TGTRQLMT. In this manner, by way of steps 304 and 305, as soon as the limiting value of the regenerative torque limiter (TRQLMTST) reaches the target value (TGTRQLMT), the subtraction operation terminates.

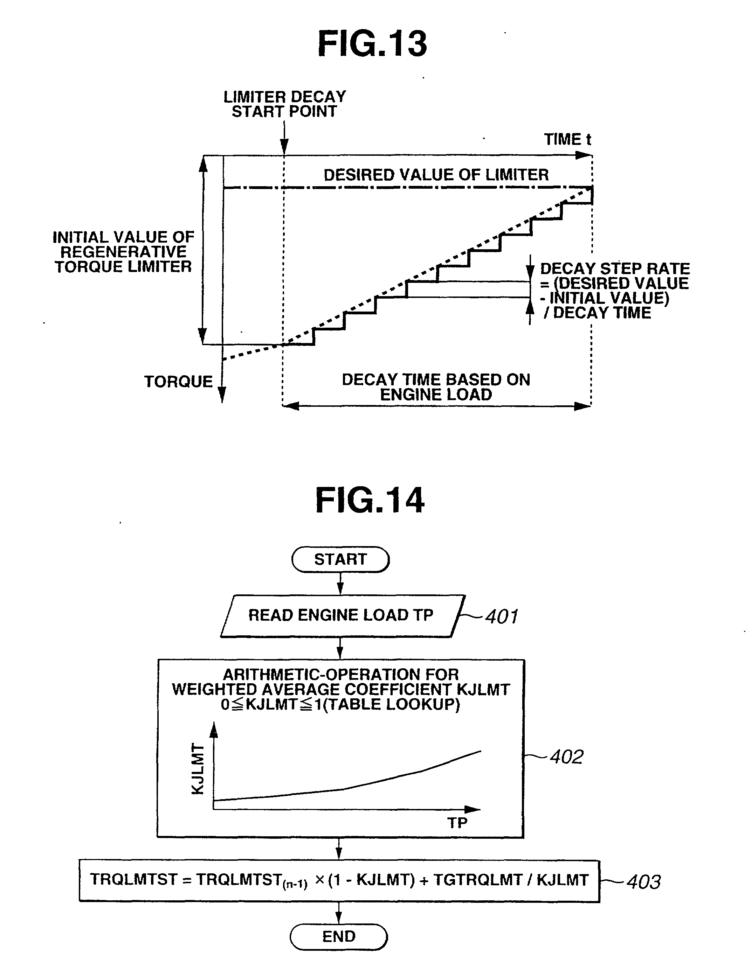

Fig. 13 is the timing chart showing the subtraction operations shown in Figs. 11 and 12. As shown in Fig. 13, according to the systems of the second and third embodiments, the subtraction operation for the controllable specified torque level (TRQLMTST) of the regenerative torque limiter can be achieved by arithmetically calculating or map-retrieving the decay step rate DTTRQLMT, utilizing the engine load as a control parameter, and thus enabling a proper and precise setting of the regenerative torque limiter responsively to variations in excessive engine torque.

Referring now to Fig. 14, there is shown the subtraction routine for the initial value (TRQLMTST) of the regenerative torque limiter, executed by the system of the fourth embodiment. According to the system of the fourth embodiment, the subtraction operation for the torque limiter (TRQLMTST) is executed by way of a weighted-average method. At step 401, engine load TP (estimated by an intake-air quantity substantially corresponding to a manipulated variable of the accelerator pedal 17) is read. At step 402, a weighted-average coefficient KJLMT ($0 \leqq$ KJLMT $\leqq 1$) is arithmetically calculated or map-retrieved from a predetermined characteristic map indicated in step 402, showing how the weighted-average coefficient has to be varied relative to the engine load TP. At step 403, the subtraction setting of the regenerative torque limiter (TRQLMTST) is made according to the following expression.

$$\text{TRQLMTST}_{(n)} = \text{TRQLMTST}_{(n-1)} \times (1\text{-KJLMT}) + \text{TGTRQLMT/KJLMT}$$

where $\text{TRQLMTST}_{(n)}$ denotes the current value of the regenerative torque limiter, $\text{TRQLMTST}_{(n-1)}$ denotes the previous value of the regenerative torque limiter, KJLMT denotes the weighted-average coefficient, and TGTRQLMT denotes the target torque limiting value.

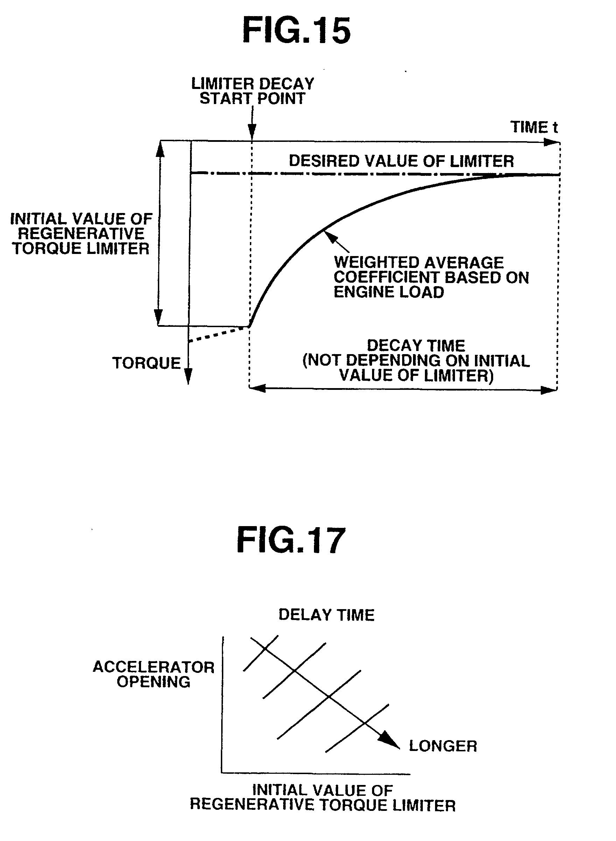

Fig. 15 is the timing chart showing the subtraction operation executed by the system of the fourth embodiment shown in Fig. 14. As appreciated from the timing chart of Fig. 15, when the subtraction setting for the regenerative torque limiter is made by way of a weighted-average method, it is possible to more precisely effectively absorb only the overshoot engine torque.

In the previously-noted embodiments, the regenerative torque limiter (TRGLMTST) acts to limit the regenerative torque of the motor generator 2 to a controllable specified torque level. Instead of limiting the regenerative torque of the motor generator 2, it will be appreciated that overshoot engine combustion torque produced during automatic engine-restart operating mode may be absorbed by limiting a regenerative electric power to a controllable specified torque level.

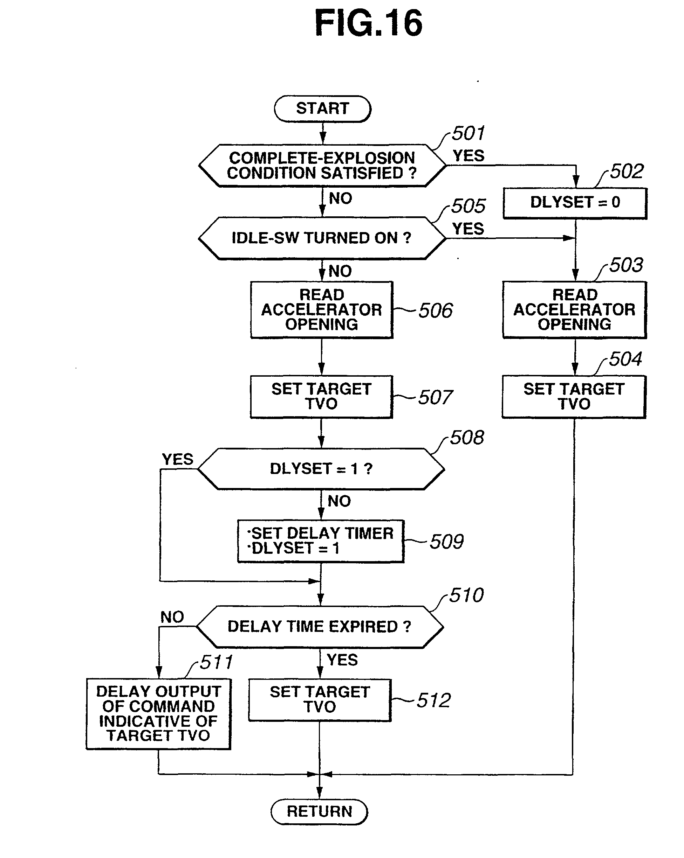

On the other hand, when the brake pedal 16 is released and then the accelerator pedal is depressed during the automatic engine-restart operating mode, the system requires such a battery ability or battery performance as to certainly absorb the previously-noted overshoot engine torque and to smoothly rise up a driving force (driving torque) during the vehicle start-up period. Of various sorts of batteries, a lead-acid battery does not have a battery capacity enough to satisfactorily absorb a large amount of overshoot torque. In case of the use of such a lead-acid battery, there is a possibility of excessive heat generation or reduced battery life (early battery deterioration). Therefore, it is more desirable to effectively suppress generation of overshoot torque itself during the automatic engine-restart mode. As previously described in reference to Fig. 7, the longer the motoring time (corresponding to a time period counted from initiation of the motoring operation of the motor generator 2), the greater negative pressure (boost) in the intake pipe is developed, and therefore the less excess air is held in the intake pipe. For the reasons discussed above, if the accelerator pedal 17 is depressed with a properly controlled (somewhat long) delay time after initiation of the motoring operation of the motor generator 2, an amount of engine torque to be absorbed by the motor generator 2 in the regenerative state becomes small, because of less excess air in the intake pipe. From such a point of view, it is advantageous to control or vary an actual throttle opening with a delay time with respect to the timing of depression of the accelerator pedal. The system of the invention can also perform the delayed throttle-opening control shown in Fig. 16.

Referring now to Fig. 16, there is shown the delayed throttle-opening control routine. In parallel with the automatic engine stop-restart control routine shown in Figs. 3A and 3B, the delayed throttle-opening control routine of Fig. 16 is cyclically executed time-triggered interrupt routines to be triggered every predetermined time intervals. As discussed hereunder, the delayed throttle-opening control of Fig. 16 is performed to control the actual opening of the throttle valve 27 depending basically on the manipulated variable of the accelerator pedal 17 (the accelerator opening).

At step 501, a check is made to determine whether the previously-noted complete-explosion condition is satisfied. When the answer to step 501 is in the affirmative, that is, the complete-explosion condition is satisfied, the routine proceeds to step 502 without executing the delayed throttle-opening control mode. At step 502, a delayed throttle-opening control initiation indicative flag DLYSET is cleared to "0". Then, step 503 occurs. At step 503, the accelerator opening of the accelerator pedal 17, sensed by the sensor 15, is read. At step 504, a target throttle valve opening TVO is set on the basis of the accelerator opening read at step 503. By way of the flow from step 501, through steps 502-503 to step 504, the actual throttle opening of the throttle valve 27 is controlled without delay time, so that the actual throttle opening is adjusted toward the target throttle opening TVO.

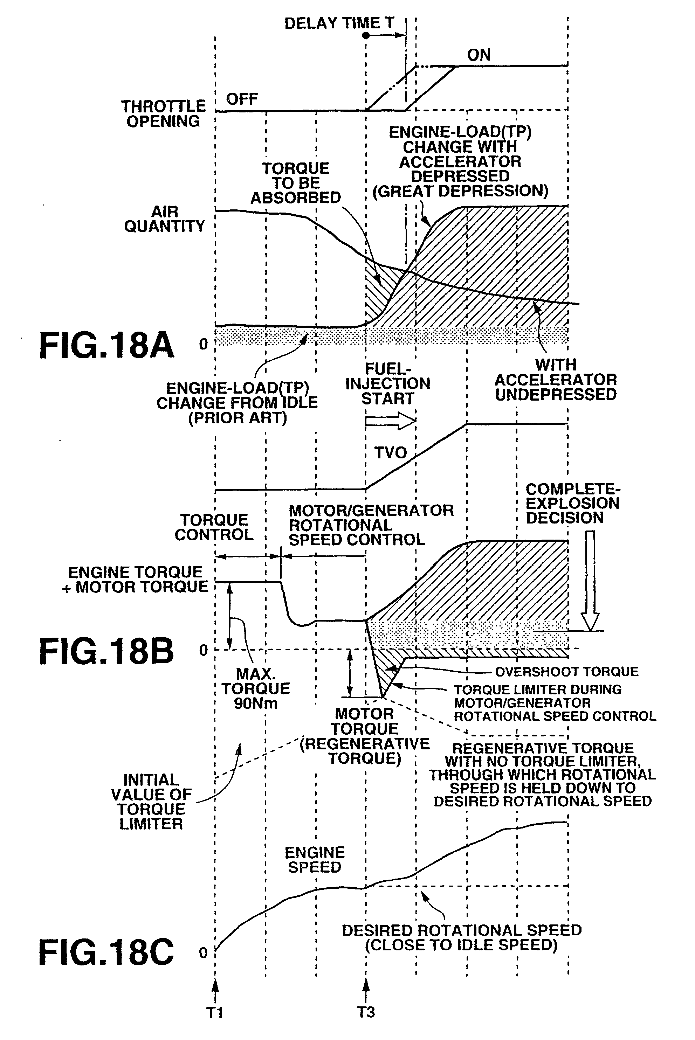

On the contrary, when the answer to step 501 is negative, that is, the complete-explosion condition is unsatisfied and thus the engine 1 is operating in the automatic engine-restart operating mode, the routine advances from step 501 to step 505. At step 505, a test is made to determine whether an idle switch (not shown) is turned ON. The idle switch is provided to detect an engine idling state. The idle switch is turned ON when the accelerator pedal is undepressed, and turned OFF when the accelerator pedal is depressed. With the idle switch turned ON, that is, the engine is in its idling state. In such an idling state, it is unnecessary to initiate the delayed throttle-opening control, and thus the routine flows from step 505 via step 503 to step 504, in order to execute the usual throttle-opening control. Conversely, when the answer to step 505 is negative, that is, the idle switch is turned OFF and thus the accelerator pedal is depressed, the routine proceeds from step 505 through steps 506 and 507 to step 508. At step 506, the accelerator opening is read. At step 507, a target throttle opening is set or determined on the basis of the accelerator opening read at step 506. At step 508, a check is made to determine whether the delayed throttle-opening control initiation flag DLYSET is set. If the current flow from step 505 through steps 506 and 507 to step 508 is the first time of the delayed throttle-opening control routine of Fig. 16, as a matter of course the flag DLYSET is reset (DLYSET = 0), and thus the procedure flows from step 508 to step 509. At step 509, a delay timer used to retard the output of a target throttle opening (TVO) command signal, is set to a predetermined delay time T, and at the same time the delayed throttle-opening control initiation indicative flag DLYSET is set at "1". Once the flag DLYSET is set, the routine jumps from step 508 to step 510, bypassing step 509. That is, at the beginning of depression of the accelerator pedal 17, the accelerator opening is detected and the target throttle opening is set based on the accelerator opening detected. The delay time T is arithmetically calculated or map-retrieved from a predetermined characteristic map of Fig. 17, showing how the delay time has to be varied relative to at least one of the accelerator opening and the initial value (TRQLMTST) of the regenerative torque limiter. As appreciated from the map shown in Fig. 17, the lower the accelerator opening and/or the higher the initial value (TRQLMTST) of the torque limiter, the longer delay time T is set, and therefore it is possible to set the delay time T suitable for an actual change in intake-air quantity. Thereafter, at step 510, a check is made to determine whether the delay time (T) has expired. If the answer to step 510 is in the negative (NO), step 511 occurs. At step 511, the output of a command signal representative of the target throttle opening TVO is delayed. Conversely, when the ECU determines that the delay time T has expired, the routine flows from step 510 to step 512. At step 512, the command signal representative of the target throttle opening TVO is output. In this manner, through steps 510 - 512, the output of the command signal representative of the target throttle opening TVO is retarded until the delay time T has expired (see the upper polygonal line of the timing chart shown in Fig. 18A). In the shown embodiment, the delay time T is determined or set based on the accelerator opening detected at the beginning of depression of the accelerator pedal 17. Actually, the accelerator opening is variable at any time, during the depressing operation of the accelerator. Therefore, it is preferable to variably set the delay time T depending on a rate of change in the accelerator opening.

Referring now to Figs. 18A - 18C, there are shown timing charts explaining as to how overshoot engine torque to be absorbed by the motor generator 2 is effectively reduced by the delayed throttle-opening control executed simultaneously with depression of the accelerator pedal (see the time T3), during the automatic engine-restart operating mode. As can be appreciated from comparison between the lower hatched overshoot torque area of Fig. 10B and the lower hatched overshoot torque area of Fig. 18B, in the presence of the delayed throttle-opening control shown in Fig. 16, the overshoot torque area is effectively reduced. The reduced overshoot torque area means a decrease in regenerative torque to be absorbed by the motor generator 2, and thus ensuring a reduced charging burden of the battery, an increased battery life, and improved durability. Also, during the idle-stop operation, the system of the embodiment can automatically certainly stop the engine, thus improving fuel economy.

The entire contents of Japanese Patent Application Nos. P11-131039 (filed May 12, 1999) and P11-233113 (filed August 19, 1999) are incorporated herein by reference.

While the foregoing is a description of the preferred embodiments carried out the invention, it will be understood that the invention is not limited to the particular embodiments shown and described herein, but that various changes and modifications may be made without departing from the scope of this invention as defined by the following claims.

## Claims

**1.** An automatic stop-restart system of an automotive internal combustion engine (1) mated to a transmission (3) which uses either one of a torque converter (4) and a start-up clutch for engine torque transmission to axle shafts (7) of driven wheels (8) of an automotive vehicle, said system capable of automatically stopping the engine (1) when the vehicle is in a stopped state, and automatically restarting the engine (1) in a torque- transmission state that an engine torque is transmitted to the axle shafts (7) of the driven wheels (8) during a start-up period of the vehicle, comprising:

a motor generator (2) connectable to the engine (1) at least during the start-up period of the vehicle, and capable of operating in a power-running mode to automatically restart the engine (1) by a motoring torque produced by a motoring operation of the motor generator (2) during the start-up period and operating in a regenerative mode for energy regeneration;

a sensor (9) sensing a rotational speed of the engine; and

a sensor (15) sensing an amount of depression of an accelerator pedal (17), **characterized by** a control unit (10) comprising:

(a) a first control section performing a rotational speed control for the motor generator (2) by setting a desired rotational speed at a predetermined idle speed so that the rotational speed of the engine (1) is brought closer to the desired rotational speed during an automatic engine-restart operating mode; and

(b) a second control section setting a regenerative torque limiter which limits a regenerative torque of the motor generator (2) to a controllable specified torque level, while executing the rotational speed control for the motor generator (2) when the accelerator pedal (17) is depressed during the automatic engine-restart operating mode.

2. The system as claimed in claim 1, **characterized in that** an initial value (TRQLMTST) of the regenerative torque limiter varies depending on at least an elapsed time (TISTPOF) counted from initiation of the motoring operation of the motor generator (2).

3. The system as claimed in claim 1, **characterized in that** an initial value (TRQLMTST) of the regenerative torque limiter varies depending on both an elapsed time (TISTPOF) counted from initiation of the motoring operation of the motor generator (2), and an engine stop time (TISTPON) counted from a time when the engine (1) is automatically stopped.

4. The system as claimed in claim 1, further comprising a pressure sensor sensing a pressure level of negative pressure in an intake pipe of an induction system of the engine (1), **characterized in that** an initial value (TRQLMTST) of the regenerative torque limiter varies depending on the pressure level of negative pressure in the intake pipe.

5. The system as claimed in claim 1, **characterized in that** an initial value (TRQLMTST) of the regenerative torque limiter varies at a predetermined time rate of change (-TTRQLMT/10 milliseconds) toward a predetermined low value from a time when the engine (1) begins to produce a combustion torque.

6. The system as claimed in claim 1, **characterized in that** an initial value (TRQLMTST) of the regenerative torque limiter varies at a predetermined time rate of change (-TTRQLMT/10 milliseconds) to a predetermined low value with a predetermined delay time (TFCBNDEC) from a time when the engine (1) begins to produce a combustion torque.

7. The system as claimed in claim 1, **characterized in that** an initial value (TRQLMTST) of the regenerative torque limiter varies at a predetermined time rate of change (-DTTRQLMT/10 milliseconds) to a predetermined low value from a time when the regenerative torque of the motor generator (2) begins to be limited to the controllable specified torque level.

8. The system as claimed in claims 5 or 6, further comprising a crank angle sensor (9) sensing a crank angle of a crankshaft of the engine (1), **characterized in that** said control unit (10) comprises a first decision section (FHIN-JEX(CYCLCS)) determining whether fuel is injected into each individual engine cylinder of the engine (1) and a second decision section (CYLCS) provided to specify the cylinder number of the engine cylinder being in a compression stroke at a current crank angle sensed by the crank angle sensor (9), and a third decision section (FCYLBRN) provided to estimate, on the basis of information from the first and second decision sections (FHINJEX (CYLCS), CYLCS), whether an engine cylinder that spark plug firing is initiated at a next ignition timing will be brought into a combustion stroke, the time that the engine (1) begins to produce the engine combustion torque being determined by a result of decision of the third decision section.

9. The system as claimed in claim 1, **characterized in that** said control unit (10) comprises a complete-explosion decision section determining whether a specified condition indicating that complete explosion occurs in the engine (1), is satisfied, the complete-explosion decision section determining that the specified condition is satisfied when the accelerator pedal (17) is in a depressed state and the regenerative torque of the motor generator (2) is continually limited to the controllable specified torque level of the regenerative torque limiter for a predetermined time period or when the number of combustion cycles of the engine (1) reaches a predetermined number, and a torque control section initiating a torque control so that a motor torque of the motor generator (2) is brought closer to a predetermined low value from a time when the complete-explosion decision section determines that the specified condition is satisfied, instead of the rotational speed control for the motor generator (2).

10. The system as claimed in claim 1, **characterized in that** said control unit (10) comprises a complete-explosion decision section determining whether a specified condition indicating that complete explosion occurs in the engine (1), is satisfied, the complete-explosion decision section determining that the specified condition is satisfied when the accelerator pedal (17) is in a depressed state and the regenerative torque of the motor generator (2) is continually limited to the controllable specified torque level of the regenerative torque limiter for a predetermined time period or when the number of combustion cycles of the engine (1) reaches a predetermined number, and a regenerative-torque-limiter releasing section releasing the regenerative torque limiter to increase the controllable specified torque level from the predetermined low value at a predetermined time rate of change (+DLTLMTP/10 milliseconds) when the complete-explosion decision section determines that the specified condition is satisfied.

11. The system as claimed in claims 5, 6 or 7, further comprising a pressure sensor sensing a pressure level of negative pressure in an intake pipe of an induction system of the engine (1), **characterized in that** the time rate of change (-DTTRQLMT/10 milliseconds) at which the initial value (TRQLMTST) of the regenerative torque limiter varies to the predetermined low value varies depending on the pressure level of negative pressure in the intake pipe.

12. The system as claimed in claim 1, further comprising an engine output control device controlling an engine's output depending on the amount of depression of the accelerator pedal (17), **characterized in that** said control unit (10) comprises:

   (c) a delay section delaying an engine's output control operation of the engine output control device with respect to such a timing that the accelerator pedal (17) is depressed, during the automatic engine-restart operating mode.

13. The system as claimed in claim 12, **characterized in that** the engine output control device comprises an electronically-controlled throttle valve (27) whose opening is controllable depending on the amount of depression of the accelerator pedal (17).

14. The system as claimed in claim 12, **characterized in that** said delay section has a predetermined characteristic that a delay time of said delay section becomes longer as the amount of depression of the accelerator pedal (17) decreases.

15. The system as claimed in claims 13 or 14, **characterized in that** said delay section has a predetermined characteristic that a delay time becomes longer as an initial value (TRQLMTST) of the regenerative torque limiter set by said second control section increases.

**Patentansprüche**

1. Automatisches Stop-/Wiederstartsystem eines Kraftfahrzeug-Verbrennungsmotors (1), der mit einem Getriebe (3) gekoppelt ist, welches entweder einen Drehmomentwandler (4) oder eine Startkupplung für die Motordrehmomentübertragung zu Achswellen (7) der angetriebenen Räder (8) eines Kraftfahrzeugs verwendet, wobei das System den Motor (1) automatisch stoppen kann, wenn das Fahrzeug sich in einem angehaltenen Zustand befindet, und den Motor (1) in einem Drehmomentübertragungszustand, in dem ein Motordrehmoment zu den Achswellen (7) der angetriebenen Räder (8) während eines Startzeitraums des Fahrzeugs übertragen wird, automatisch wieder starten kann, umfassend:

   einen Motor-Generator (2), der zumindest während des Startzeitraums des Fahrzeugs mit dem Motor (1) verbunden sein kann, und der in einem Kraftantriebsmodus funktionieren kann, um den Motor (1) automatisch durch ein Antriebsdrehmoment, erzeugt durch eine Antriebsfunktion des Motor-Generators (2) während des Startzeitraums, wieder zu starten, und in einem Regenerativmodus zur Energiewiederherstellung funktionieren kann;
einen Sensor (9), der eine Drehzahl des Motors erfasst; und
einen Sensor (15), der ein Ausmaß des Herunterdrückens eines Gaspedals (17) erfasst, **gekennzeichnet durch** eine Steuereinheit (10), umfassend:

(a) einen ersten Steuerabschnitt, der eine Drehzahlsteuerung für den Motor-Generator (2) **durch** Festlegen einer gewünschten Drehzahl bei einer vorbestimmten Leerlaufdrehzahl durchführt, so dass die Drehzahl des Motors (1) der gewünschten Drehzahl während eines automatischen Motorwiederstart-Betriebsmodus näher kommt; und
(b) einen zweiten Steuerabschnitt, der einen Regenerativdrehmomentbegrenzer festlegt, der ein Regenerativdrehmoment des Motor-Generators (2) auf ein steuerbares festgelegtes Drehmomentniveau begrenzt, während die Drehzahlsteuerung für den Motor-Generator (2) ausgeführt wird, wenn das Gaspedal (17) während des automatischen Motorwiederstart-Betriebsmodus heruntergedrückt ist.

2.  System nach Anspruch 1, **dadurch gekennzeichnet, dass** ein Anfangswert (TRQLMTST) des Regenerativdrehmomentbegrenzers sich abhängig von zumindest einem verstrichenen Zeitraum (TISTPOF), gezählt vom Beginn der Antriebsfunktion des Motor-Generators (2), verändert.

3.  System nach Anspruch 1, **dadurch gekennzeichnet, dass** ein Anfangswert (TRQLMTST) des Regenerativdrehmomentbegrenzers sich abhängig von sowohl einem verstrichenen Zeitraum (TISTPOF), gezählt vom Beginn der Antriebsfunktion des Motor-Generators (2), als auch einem Motorstopzeitraum (TISTPON), gezählt von einem Zeitpunkt, wenn der Motor (1) automatisch gestoppt wird, verändert.

4.  System nach Anspruch 1, ferner umfassend einen Drucksensor, der ein Druckniveau eines Unterdrucks in einer Ansaugleitung eines Ansaugsystems des Motors (1) erfasst, **dadurch gekennzeichnet, dass** ein Anfangswert (TRQLMTST) des Regenerativdrehmomentbegrenzers sich abhängig von dem Druckniveau des Unterdrucks in der Ansaugleitung verändert.

5.  System nach Anspruch 1, **dadurch gekennzeichnet, dass** ein Anfangswert (TRQLMTST) des Regenerativdrehmomentbegrenzers sich bei einer vorbestimmten Zeitänderungsrate (-TTRQLMT/10 Millisekunden) zu einem vorbestimmten niedrigen Wert verändert, von einem Zeitpunkt, wenn der Motor (1) beginnt, ein Verbrennungsdrehmoment zu erzeugen.

6.  System nach Anspruch 1, **dadurch gekennzeichnet, dass** ein Anfangswert (TRQLMTST) des Regenerativdrehmomentbegrenzers sich bei einer vorbestimmten Zeitänderungsrate (-TTRQLMT/10 Millisekunden) zu einem vorbestimmten niedrigen Wert mit einer vorbestimmten Verzögerungszeit (TFCBNDED) verändert, von einem Zeitpunkt, wenn der Motor (1) beginnt, ein Verbrennungsdrehmoment zu erzeugen.

7.  System nach Anspruch 1, **dadurch gekennzeichnet, dass** ein Anfangswert (TRQLMTST) des Regenerativdrehmomentbegrenzers sich bei einer vorbestimmten Zeitänderungsrate (-DTTRQLMT/10 Millisekunden) zu einem vorbestimmten niedrigen Wert verändert, von einem Zeitpunkt, wenn das Regenerativdrehmoment des Motor-Generators (2) beginnt, auf das steuerbare festgelegte Drehmomentniveau begrenzt zu werden.

8.  System nach Anspruch 5 oder 6, ferner umfassend einen Kurbelwinkelsensor (9), der einen Kurbelwinkel einer Kurbelwelle des Motors (1) erfasst, **dadurch gekennzeichnet, dass** die Steuereinheit (10) einen ersten Entscheidungsabschnitt (FHIN-JEX(CYCLCS)), der bestimmt, ob Kraftstoff in jeden einzelnen Motorzylinder des Motors (1) eingespritzt wird, und einen zweiten Entscheidungsabschnitt (CYLCS), der vorgesehen ist, um die Zylinderzahl des Motorzylinders, der sich in einem Kompressionshub bei einem aktuellen Kurbelwinkel, erfasst vom Kurbelwinkelsensor (9), befindet, und einen dritten Entscheidungsabschnitt (FCYLBRN), der vorgesehen ist, um auf der Grundlage der Information vom ersten und zweiten Entscheidungsabschnitt (FHINJEX(CYLCS), CYLCS) zu schätzen, ob ein Motorzylinder, dessen Zündkerzenzündung eingeleitet wurde, bei einem nächsten Zündungszeitpunkt in einem Verbrennungshub gebracht wird, umfasst, wobei der Zeitpunkt, zu dem der Motor (1) beginnt, das Motorverbrennungsdrehmoment zu erzeugen, durch ein Ergebnis der Entscheidung des dritten Entscheidungsabschnitts bestimmt wird.

9.  System nach Anspruch 1, **dadurch gekennzeichnet, dass** die Steuereinheit (10) einen Vollexplosions-Entscheidungsabschnitt umfasst, der bestimmt, ob eine festgelegte Bedingung, die anzeigt, dass eine vollständige Explosion im Motor (1) auftritt, erfüllt ist, wobei der Vollexplosions-Entscheidungsabschnitt bestimmt, dass die festgelegte Bedingung erfüllt ist, wenn das Gaspedal (17) sich in einem heruntergedrückten Zustand befindet und das Regenerativdrehmoment des Motor-Generators (2) ständig auf das steuerbare festgelegte Drehmomentniveau des Regenerativdrehmomentbegrenzers für einen vorbestimmten Zeitraum begrenzt ist oder wenn die Anzahl der Verbrennungszyklen des Motors (1) eine vorbestimmten Anzahl erreicht, und ein Drehmoment-Steuerabschnitt eine Drehmomentsteuerung einleitet, so dass ein Motordrehmoment des Motor-Generators (2) einem vorbestimmten niedrigen Wert angenähert wird, von einem Zeitpunkt, wenn der Vollexplosions-Entscheidungsabschnitt bestimmt, dass die festgelegte Bedingung erfüllt ist, an Stelle der Drehzahlsteuerung für den Motor-Generator (2).

10. System nach Anspruch 1, **dadurch gekennzeichnet, dass** die Steuereinheit (10) einen Vollexplosions-Entscheidungsabschnitt umfasst, der bestimmt, ob eine festgelegte Bedingung, die anzeigt, dass eine vollständige Explosion im Motor (1) auftritt, erfüllt ist, wobei der Vollexplosions-Entscheidungsabschnitt bestimmt, dass die festgelegte Bedingung erfüllt ist, wenn das Gaspedal (17) sich in einem heruntergedrückten Zustand befindet und das Regenerativdrehmoment des Motor-Generators (2) ständig auf das steuerbare festgelegte Drehmomentniveau des Regenerativdrehmomentbegrenzers für einen vorbestimmten Zeitraum begrenzt ist oder wenn die Anzahl der Verbrennungszyklen des Motors (1) eine vorbestimmte Anzahl erreicht, und ein Regenerativdrehmomentbegrenzer-Freigabeabschnitt den Regenerativdrehmomentbegrenzer freigibt, um das steuerbare festgelegte Drehmomentniveau von dem vorbestimmten niedrigen Wert bei einer vorbestimmten Zeitänderungsrate (+DLTLMTP/10 Millisekunden) zu erhöhen, wenn der Vollexplosions-Entscheidungsabschnitt bestimmt, dass die festgelegte Bedingung erfüllt ist.

11. System nach Anspruch 5, 6 oder 7, ferner umfassend einen Drucksensor, der ein Druckniveau des Unterdrucks in einer Ansaugleitung eines Ansaugsystems des Motors (1) erfasst, **dadurch gekennzeichnet, dass** die Zeitänderungsrate (-DTTRQLMT/10 Millisekunden), bei welcher der Anfangswert (TRQLMTST) des Regenerativdrehmomentbegrenzers sich zum vorbestimmten niedrigen Wert verändert, in Abhängigkeit vom Druckniveau des Unterdrucks in der Ansaugleitung variiert.

12. System nach Anspruch 1, ferner umfassend eine Motorleistungs-Steuervorrichtung, welche eine Ausgangsleistung des Motors in Abhängigkeit von dem Ausmaß des Herunterdrückens des Gaspedals (17) steuert, **dadurch gekennzeichnet, dass** die Steuereinheit (10) umfasst:

(c) einen Verzögerungsabschnitt, der eine Steuerfunktion der Motorausgangsleistung der Motorleistungs-Steuervorrichtung in Bezug auf eine solche Zeitmessung, wenn das Gaspedal (17) heruntergedrückt ist, verzögert, während des automatischen Motorwiederstart-Betriebsmodus.

13. System nach Anspruch 12, **dadurch gekennzeichnet, dass** die Motorleistungs-Steuervorrichtung ein elektronisch gesteuertes Drosselventil (27) umfasst, dessen Öffnung in Abhängigkeit von dem Ausmaß des Herunterdrückens des Gaspedals (17) steuerbar ist.

14. System nach Anspruch 12, **dadurch gekennzeichnet, dass** der Verzögerungsabschnitt eine vorbestimmte Charakteristik aufweist, dass eine Verzögerungszeit des Verzögerungsabschnittes länger wird, wenn das Ausmaß des Herunterdrückens des Gaspedals (17) abnimmt.

15. System nach Anspruch 13 oder 14, **dadurch gekennzeichnet, dass** der Verzögerungsabschnitt eine vorbestimmte Charakteristik aufweist, dass eine Verzögerungszeit länger wird, wenn ein Anfangswert (TRQLMTST) des Regenerativdrehmomentbegrenzers, festgelegt durch den zweiten Steuerabschnitt, steigt.

**Revendications**

1. Système d'arrêt et de redémarrage automatique pour un moteur à combustion interne pour véhicule (1) couplé à une transmission (3) qui utilise l'un ou l'autre d'un convertisseur de couple (4) et d'un embrayage de démarrage pour la transmission du couple moteur aux arbres de roue (7) des roues motrices (8) d'un véhicule automobile, ledit système capable d'arrêter automatiquement le moteur (1) lorsque le véhicule est à l'état arrêté, et de redémarrer automatiquement le moteur (1) à l'état de transmission de couple qu'un couple moteur est transmis aux arbres de roue (7) des roues motrices (8) pendant une période de démarrage du véhicule, comprenant :

un moteur-générateur (2) pouvant être raccordé au moteur (1) au moins pendant la période de démarrage du véhicule et capable de fonctionner dans un mode d'essai de puissance pour redémarrer automatiquement le moteur (1) par un couple d'entraînement produit par une opération d'entraînement du moteur-générateur (2) pendant la période de démarrage et fonctionnant dans un mode régénérateur pour la régénération d'énergie ; un capteur (9) détectant une vitesse de rotation du moteur ; et un capteur (15) détectant un degré d'enfoncement d'une pédale d'accélérateur (17), **caractérisé par** une unité de commande (10) comprenant :

(a) une première section de commande réalisant une commande de vitesse de rotation pour le moteur-générateur (2) en définissant une vitesse de rotation souhaitée à une vitesse de ralenti prédéterminée de sorte que la vitesse de rotation du moteur (1) est amenée plus proche de la vitesse de rotation souhaitée pendant un mode d'opération de redémarrage automatique du moteur ; et
(b) une deuxième section de commande définissant un limiteur de couple régénérateur qui limite un couple régénérateur du moteur générateur (2) à un niveau de couple spécifié pouvant être commandé, tout en exécutant la commande de vitesse de rotation pour le moteur-générateur (2) lorsque la pédale d'accélérateur (17) est enfoncée pendant le mode d'opération de redémarrage automatique du moteur.

**2.** Système selon la revendication 1, **caractérisé en ce qu'**une valeur initiale (TRQLMTST) du limiteur de couple régénérateur varie selon au moins un temps écoulé (TISTPOF) compté depuis le début de l'opération de motorisation du moteur-générateur (2).

**3.** Système selon la revendication 1, **caractérisé en ce qu'**une valeur initiale (TRQLMTST) du limiteur de couple régénérateur varie selon à la fois un temps écoulé (TISTPOF) compté depuis le début de l'opération de motorisation du moteur-générateur (2) et un temps d'arrêt du moteur (TISTPON) compté depuis un temps où le moteur (1) est arrêté automatiquement.

**4.** Système selon la revendication 1, comprenant en outre un capteur de pression détectant un niveau de pression de pression négative dans une conduite d'admission d'un système d'induction du moteur (1), **caractérisé en ce qu'**une valeur initiale (TRQLMTST) du limiteur de couple régénérateur varie selon le niveau de pression de pression négative dans la conduite d'admission.

**5.** Système selon la revendication 1, **caractérisé en ce qu'**une valeur initiale (TRQLMTST) du limiteur de couple régénérateur varie à un régime de décharge de changement prédéterminé (-TTRQLMT/10 millisecondes) vers une valeur basse prédéterminée depuis un temps où le moteur (1) commence à produire un couple de combustion.

**6.** Système selon la revendication 1, **caractérisé en ce qu'**une valeur initiale (TRQLMTST) du limiteur de couple régénérateur varie à un régime de décharge de changement prédéterminé (-TTRQLMT/10 millisecondes) vers une valeur basse prédéterminée avec un temps de retard prédéterminé (TFCBNDEC) depuis un temps où le moteur (1) commence à produire un couple de combustion.

**7.** Système selon la revendication 1, **caractérisé en ce qu'**une valeur initiale (TRQLMTST) du limiteur de couple régénérateur varie à un régime de décharge de changement prédéterminé (-DTTRQLMT/10 millisecondes) vers une valeur basse prédéterminée depuis un temps où le couple régénérateur du moteur-générateur (2) commence à être limité au niveau de couple spécifié pouvant être commandé.

**8.** Système selon les revendications 5 ou 6, comprenant en outre un capteur de position de vilebrequin (9) détectant une position de vilebrequin d'un vilebrequin du moteur (1), **caractérisé en ce que** ladite unité de commande (10) comprend une première section de décision (FHIN-JEX(CYLCS)) déterminant si le carburant est injecté dans chaque cylindre moteur individuel du moteur (1) et une deuxième section de décision (CYLCS) prévue pour spécifier le numéro de cylindre du cylindre moteur se trouvant dans une course de compression à une position de vilebrequin actuelle détectée par le capteur de position de vilebrequin (9), et une troisième section de décision (FCYLBRN) prévue pour estimer, sur la base des informations provenant des première et deuxième sections de décision (FHINJEX(CYLCS), CYLCS), si un cylindre moteur qu'un allumage de bougie est entamé à un temps d'allumage suivant est amené dans une course de combustion, le temps où le moteur (1) commence à produire le couple de combustion de moteur étant déterminé par un résultat de décision de la troisième section de décision.

**9.** Système selon la revendication 1, **caractérisé en ce que** ladite unité de commande (10) comprend une section de décision d'explosion complète déterminant si une condition spécifiée indiquant que l'explosion complète se produit dans le moteur (1), est satisfaite, la section de décision d'explosion complète déterminant que la condition spécifiée est satisfaite lorsque la pédale d'accélérateur (17) se trouve à l'état enfoncé et le couple régénérateur du moteur-générateur (2) est limité de manière continue au niveau de couple spécifié pouvant être commandé du limiteur de couple régénérateur pendant une période prédéterminée ou lorsque le nombre de cycles de combustion du moteur (1) atteint un nombre prédéterminé, et une section de commande de couple commençant une commande de couple de sorte qu'un couple moteur du moteur-générateur (2) est amené plus proche d'une valeur basse prédéterminée depuis un temps où la section de décision d'explosion complète détermine que la condition spécifiée est satisfaite, au lieu de la commande de vitesse de rotation pour le moteur-générateur (2).

**10.** Système selon la revendication 1, **caractérisé en ce que** ladite unité de commande (10) comprend une section de décision d'explosion déterminant si une condition spécifiée indiquant que l'explosion complète se produit dans le moteur (1), est satisfaite, la section de décision d'explosion complète déterminant que la condition spécifiée est satisfaite lorsque la pédale d'accélérateur (17) se trouve à l'état enfoncé et le couple régénérateur du moteur-générateur (2) est limité de manière continue au niveau de couple spécifié pouvant être commandé du limiteur de couple régénérateur pendant une période prédéterminée ou lorsque le nombre de cycles de combustion du moteur (1) atteint un nombre prédéterminé, et une section de relâchement de limiteur de couple régénérateur relâchant le limiteur de couple régénérateur pour augmenter le niveau de couple spécifié pouvant être commandé à partir de la valeur basse prédéterminée à un régime de décharge de changement prédéterminé (+DLTLMTP/10 millisecondes) lorsque la section de décision d'explosion complète détermine que la condition spécifiée est satisfaite.

**11.** Système selon les revendications 5, 6 ou 7, comprenant en outre un capteur de pression détectant un niveau de pression de pression négative dans une conduite d'admission d'un système d'induction du moteur (1), **caractérisé en ce que** le régime de décharge de changement (-DTTRQLMT/10 millisecondes) auquel la valeur initiale (TRQLMTST) du limiteur de couple régénérateur varie vers la valeur basse prédéterminée varie selon le niveau de pression de pression négative dans la conduite d'admission.

**12.** Système selon la revendication 1, comprenant en outre un dispositif de commande de sortie de moteur commandant une sortie de moteur selon le degré d'enfoncement de la pédale d'accélérateur (17), **caractérisé en ce que** ladite unité de commande (10) comprend :

(c) une section de retard retardant l'opération de commande de sortie de moteur du dispositif de commande de sortie de moteur par rapport à une distribution telle que la pédale d'accélérateur (17) est enfoncée pendant le mode d'opération de redémarrage automatique du moteur.

**13.** Système selon la revendication 12, **caractérisé en ce que** le dispositif de commande de sortie de moteur comprend une soupape papillon à commande électronique (27) dont l'ouverture peut être commandée selon le degré d'enfoncement de la pédale d'accélérateur (17).

**14.** Système selon la revendication 12, **caractérisé en ce que** ladite section de retard comprend une caractéristique prédéterminée qu'un temps de retard de ladite section de retard devient plus long lorsque le degré d'enfoncement de la pédale d'accélérateur (17) diminue.

**15.** Système selon les revendications 13 ou 14, **caractérisé en ce que** ladite section de retard présente une caractéristique prédéterminée qu'un temps de retard devient plus long lorsque la valeur initiale (TRQLMTST) du limiteur de couple régénérateur défini par ladite deuxième section de commande augmente.

# FIG.1

| | | |
|---|---|---|
| BRAKE SENSOR | START-UP CONTROL UNIT | ELECTRIC-POWER CONTROL UNIT |
| 11 | 10 | 12 |

BATTERY

13

ACCELERATOR SENSOR

15

# FIG.2

EP 1 052 400 B1

# FIG.3A

START

1. WARM-UP OPERATION TERMINATES ? — NO → FCOND = 1 (18)
   YES ↓

2. BRAKE PEDAL DEPRESSED ? — NO
   YES ↓

3. VEHICLE SPEED ≒ 0 ? — NO
   YES ↓

4. ACCELERATOR PEDAL UNDEPRESSED ? — NO
   YES ↓

5. IDLE SPEED OR LESS ? — NO
   YES ↓

6. FCOND = 0 ? — NO
   YES ↓

7. SET STOP-MODE DELAY TIMER
   ·FCOND = 1

8. R RANGE ? — YES
   NO ↓

9. FRFST = 0 — NO

10. ENGINE IN STOPPED STATE ? — YES
    NO ↓

11. STOP-MODE TIME DELAY EXP. ? — YES → (A)
    NO → (B)

19. ENGINE IN STOPPED STATE ? — YES
    NO → (B)

21. I/S TIME EXPIRED ? — YES → (C)
    NO ↑

29. ENGINE IN STOPPED STATE ? — NO
    YES ↓

30. FRFST = 0 ? — YES
    NO ↑

31. SET RESTART-MODE DELAY TIMER
    ·FRFST = 1

32. RESTART-MODE TIME DELAY EXP. ? — NO
    YES

# FIG.3B

(B) (A) (C)

EP 1 052 400 B1

**20** FISTPFST = 0

**12** TEMPORARY ENGINE STOP

**22** ENGINE RESTART

**13** MOTOR TORQUE = 0

**23** FENGSTRT = 0 ? — NO

**14** INHIBIT FUEL-INJECTION OPERATION

YES

**24** ·SET BOOST-DEVELOPMENT DELAY TIMER ·FENGSTRT = 1

YES — **15** FISTPFST = 0 ?

NO

**25** ACCELERATOR PEDAL UNDEPRESSED ? — NO

**16** ·SET I/S TIMER ·FISTPFST = 1

YES

**26** SET DESIRED ROTATIONAL SPEED AT IDLE SPEED

**33** COMPLETE-EXPLOSION CONDITION SATISFIED ? — NO

YES

**17** FENGSTRT = 0

NO — **27** PREDETERMINED BOOST-DEVELOPMENT TIME EXPIRED ?

YES

**28** FUEL INJECTION

**34** SET DESIRED ROTATIONAL SPEED AT IDLE SPEED

**35** MOTOR-GENERATOR TORQUE CONTROL MOTOR TORQUE = 0

**36** FUEL INJECTION

( RETURN )

# FIG.4

```
                                    ( 10ms JOB )
                                          │
            NO                            ▼                    ╱─101
      ┌─────────────────────────< FCYLBRN = 1 ? >
      │                                   │ YES
      │                                   │
      │  ╱─109                            │
      │ < FHINJEX(CYLCS) = 1 ? >─YES─┐    │
      │       │ NO    ╱─110          │    ▼              ╱─102
      │  ┌─────────────────┐         │  ┌──────────────┐
      │  │ TFCBNDEC =      │         │  │ FCYLBRN = 1  │
      │  │ TIMEFCBN#       │         │  └──────────────┘
      │  └─────────────────┘         │         │
      │       │      ╱─111           │         ▼              ╱─103
      │  ┌─────────────────┐    NO   │  < TFCBNDEC = 0 ? >
      │  │ ARITHMETIC      │   ┌──────┘         │ YES
      │  │ OPERATION       │   │               │
      │  │ FOR INITIAL     │   │               ▼                ╱─104
      │  │ VALUE           │   │  ┌──────────────────────┐
      │  │ (TRQLMTST) FOR  │   │  │ REGENERATIVE TORQUE  │
      │  │ REGENERATIVE    │   │  │ ≦ PREDETERMINED VALUE│─YES─┐
      │  │ TORQUE LIMITER  │   │  │ FOR PREDETERMINED    │     │
      │  └─────────────────┘   │  │ TIME PERIOD ?        │     │     ╱─107
      │      TRQLMTST          │  └──────────────────────┘     │  ┌──────────────┐
      │         │     ╱─112    │         │ NO        ╱─105     │  │ fKANBAKU = 1 │
      │  ┌─────────────────┐   │  < fKANBAKU = 1 ? >─YES──────┐│  └──────────────┘
      │  │ ARITHMETIC      │   │         │ NO                 ││         │
      │  │ OPERATION       │   │         │        ╱─106       ▼▼         ▼
      │  │ FOR INITIAL     │   │  ┌──────────────────────┐  ┌──────────────────────┐
      │  │ VALUE           │   │  │ REGENERATIVE-TORQUE- │  │ REGENERATIVE-TORQUE- │
      │  │ (TRQLMTST) FOR  │   │  │ LIMITER SUBTRACTION  │  │ LIMITER ADDITION     │
      │  │ REGENERATIVE    │   │  │                      │  │                      │
      │  │ TORQUE LIMITER  │   │  │ TRQLMTST =           │  │ TRQLMTST =           │
      │  └─────────────────┘   │  │ TRQLMTST(n-1) -      │  │ TRQLMTST(n-1) +      │
      │      TRQLMTST │  ╱─113  │  │ DTTRQLMT             │  │ DLTLMTP              │
      │  ┌─────────────────┐   │  │ UNTIL TRQLMTST ≧     │  │ UNTIL TRQLMTST ≦     │
      │  │ TFCBNDEC =      │   │  │ TGTRQLMT             │  │ TGTRQMAX             │
      │  │ TFCBNDEC(n-1) -1│   │  └──────────────────────┘  └──────────────────────┘
      │  └─────────────────┘   │             │                      │
      └────────┴───────────────┴─────────────┴──────────────────────┘
                                          │
                                          ▼
                                     ( RETURN )
```

Block 101: FCYLBRN = 1 ?

Block 102: FCYLBRN = 1

Block 103: TFCBNDEC = 0 ?

Block 104: REGENERATIVE TORQUE ≦ PREDETERMINED VALUE FOR PREDETERMINED TIME PERIOD ?

Block 105: fKANBAKU = 1 ?

Block 106: REGENERATIVE-TORQUE-LIMITER SUBTRACTION

$TRQLMTST = TRQLMTST_{(n-1)} - DTTRQLMT$

UNTIL $TRQLMTST \geqq TGTRQLMT$

Block 107: fKANBAKU = 1

Block 108: REGENERATIVE-TORQUE-LIMITER ADDITION

$TRQLMTST = TRQLMTST_{(n-1)} + DLTLMTP$

UNTIL $TRQLMTST \leqq TGTRQMAX$

Block 109: FHINJEX(CYLCS) = 1 ?

Block 110: TFCBNDEC = TIMEFCBN#

Block 111: ARITHMETIC OPERATION FOR INITIAL VALUE (TRQLMTST) FOR REGENERATIVE TORQUE LIMITER

Block 112: ARITHMETIC OPERATION FOR INITIAL VALUE (TRQLMTST) FOR REGENERATIVE TORQUE LIMITER

Block 113: $TFCBNDEC = TFCBNDEC_{(n-1)} - 1$

EP 1 052 400 B1

EP 1 052 400 B1

# FIG.5

ENGINE STOP TIME
(COUNTED FROM FUEL CUTOFF)

TISTPON

TISTPON

INITIAL VALUE OF
REGENERATIVE TORQUE LIMITER

ENGINE TORQUE
(AIR QUANTITY)

Boost
mmHg

0

0

-550

IDLE-STOP
STATE

ACCELERATOR
PEDAL
DEPRESSED

ACCELERATOR
PEDAL
DEPRESSED

TISTPOF

TISTPOF

0

0

MOTORING TIME

# FIG.6

MOTORING TIME

1

0

0

1

ENGINE STOP TIME
(COUNTED FROM FUEL CUTOFF)

25

# FIG.7

SUCH TIME PERIOD THAT EXCESS AIR BECOMES LESS
IS DEPENDENT ON ENGINE LOAD.
(THE HIGHER ENGINE LOAD, THE SHORTER THIS TIME PERIOD.)

TORQUE TO BE ABSORBED
(OBTAINED WHEN DEPRESSING ACCELERATOR
AFTER 0.8 SECOND OF MOTORING)

GREATER
TORQUE
TO BE
ABSORBED

GREATER
EXCESS-AIR
QUANTITY

TORQUE TO BE ABSORBED
(OBTAINED WHEN DEPRESSING
ACCELERATOR JUST AFTER
MOTORING)

0     0.1     0.2     0.3     0.4     0.5     0.6     0.7     0.8     0.9     1

TIME sec

EXCESS-AIR QUANTITY
(OBTAINED WHEN DEPRESSING
ACCELERATOR AFTER 0.8 SECOND
OF MOTORING)

EXCESS-AIR QUANTITY
(OBTAINED WHEN DEPRESSING
ACCELERATOR JUST AFTER MOTORING)

EP 1 052 400 B1

# FIG.8

COMPLETE-EXPLOSION
DECISION
¥flGOK4 = 1

¥FCYLBRN = 1

TIMEFCBN

0

TRQLMTST
(INITIAL VALUE)

REGENERATIVE
TORQUE LIMITER

-DTTRQLMT#

TGTRQLMT#

+DLTLMTP#

TGTRQMAX#

EP 1 052 400 B1

EP 1 052 400 B1

**FIG.9A**

AIR QUANTITY

COMPLETE-EXPLOSION
DECISION DISABLING
TIME PERIOD

0

ENGINE-LOAD(TP)
CHANGE FROM IDLE
(PRIOR ART)

FUEL-
INJECTION
START

WITH
ACCELERATOR
UNDEPRESSED

BOOST-DEVELOPMENT
TIME PERIOD

TVO

**FIG.9B**

TORQUE
CONTROL

MOTOR/GENERATOR
ROTATIONAL
SPEED CONTROL

ENGINE TORQUE
+ MOTOR TORQUE

COMPLETE-
EXPLOSION
DECISION

0

MAX.
TORQUE
90Nm

MOTOR TORQUE
(REGENERATIVE TORQUE)
WITHIN CONTROL AREA
BASED ON MOTOR/
GENERATOR ROTATIONAL
SPEED CONTROL

TORQUE LIMITER
DURING
MOTOR/GENERATOR
ROTATIONAL
SPEED CONTROL

ENGINE
SPEED

**FIG.9C**

0

DESIRED ROTATIONAL SPEED
(CLOSE TO IDLE SPEED)

T1

T3

28

EP 1 052 400 B1

THROTTLE OPENING

OFF

ON

**FIG.10A** 0

AIR QUANTITY

TORQUE ABSORBED BY MOTOR/GENERATOR

ENGINE-LOAD(TP) CHANGE WITH ACCELERATOR DEPRESSED (GREAT DEPRESSION)

ENGINE-LOAD(TP) CHANGE FROM IDLE (PRIOR ART)

FUEL-INJECTION START

WITH ACCELERATOR UNDEPRESSED

TVO

TORQUE CONTROL

MOTOR/GENERATOR ROTATIONAL SPEED CONTROL

COMPLETE-EXPLOSION DECISION

ENGINE TORQUE + MOTOR TORQUE

ENGINE TORQUE

**FIG.10B** 0

MAX. TORQUE 90Nm

OVERSHOOT TORQUE

TORQUE LIMITER DURING MOTOR/GENERATOR ROTATIONAL SPEED CONTROL

MOTOR TORQUE (REGENERATIVE TORQUE)

REGENERATIVE TORQUE WITH NO TORQUE LIMITER, THROUGH WHICH ROTATIONAL SPEED IS HELD DOWN TO DESIRED ROTATIONAL SPEED

INITIAL VALUE OF TORQUE LIMITER

ENGINE SPEED

**FIG.10C** 0

DESIRED ROTATIONAL SPEED (CLOSE TO IDLE SPEED)

T1

T3

29

# FIG.11

START

READ ENGINE LOAD TP — 201

ARITHMETIC-OPERATION
FOR DECAY TIME DTDLMT
(TABLE LOOKUP) — 202

DTTRQLMT = (TRQLMTST - TGTRQLMT) / DTDLMT — 203

$TRQLMTST = TRQLMTST_{(n-1)} - DTTRQLMT \times TJOB\#$ — 204

TRQLMTST ≧ TGTRQLMT# ? — 205

NO

YES

TRQLMTST = TGTRQLMT# — 206

END

# FIG.12

START

READ ENGINE LOAD TP — 301

ARITHMETIC-OPERATION FOR
SUBTRACTION STEP RATE DTTRQLMT
(MAP RETRIEVAL)

TP | GREATER

SMALLER | TRQLMTST

— 302

$TRQLMTST = TRQLMTST_{(n-1)} - DTTRQLMT$ — 303

$TRQLMTST \geqq TGTRQLMT\# ?$ — 304

NO

YES

TRQLMTST = TGTRQLMT# — 305

END

# FIG.13

LIMITER DECAY
START POINT

TIME t

DESIRED VALUE OF LIMITER

INITIAL VALUE OF
REGENERATIVE
TORQUE LIMITER

DECAY STEP RATE
= (DESIRED VALUE
- INITIAL VALUE)
/ DECAY TIME

TORQUE

DECAY TIME BASED ON
ENGINE LOAD

# FIG.14

START

READ ENGINE LOAD TP —401

ARITHMETIC-OPERATION FOR
WEIGHTED AVERAGE COEFFICIENT KJLMT
$0 \leqq KJLMT \leqq 1$(TABLE LOOKUP)

KJLMT

TP

—402

$TRQLMTST = TRQLMTST_{(n-1)} \times (1 - KJLMT) + TGTRQLMT / KJLMT$ —403

END

# FIG.15

LIMITER DECAY START POINT

TIME t

DESIRED VALUE OF LIMITER

INITIAL VALUE OF REGENERATIVE TORQUE LIMITER

WEIGHTED AVERAGE COEFFICIENT BASED ON ENGINE LOAD

TORQUE

DECAY TIME (NOT DEPENDING ON INITIAL VALUE OF LIMITER)

# FIG.17

DELAY TIME

ACCELERATOR OPENING

LONGER

INITIAL VALUE OF REGENERATIVE TORQUE LIMITER

# FIG.16

START

501 COMPLETE-EXPLOSION CONDITION SATISFIED ? — YES → 502 DLYSET = 0

NO

505 IDLE-SW TURNED ON ? — YES →

NO

506 READ ACCELERATOR OPENING

503 READ ACCELERATOR OPENING

507 SET TARGET TVO

504 SET TARGET TVO

508 DLYSET = 1 ? — YES

NO

509 ·SET DELAY TIMER ·DLYSET = 1

510 DELAY TIME EXPIRED ?

NO

YES

511 DELAY OUTPUT OF COMMAND INDICATIVE OF TARGET TVO

512 SET TARGET TVO

RETURN

FIG.18A

FIG.18B

FIG.18C